# EUROPEAN PATENT APPLICATION

(11) **EP 4 369 304 A1**
(43) Date of publication of application: **15.05.2024**
(21) Application number: 22837284.3
(22) Date of filing: 25.03.2022
(51) Int. Cl.: G06T 15/20, G06T 19/00, H04N 23/60

(54) **INFORMATION PROCESSING DEVICE, INFORMATION PROCESSING METHOD, AND PROGRAM**

(30) Priority: 09.07.2021 JP 2021114518
(71) Applicant: Sony Group Corporation, Tokyo 108-0075 (JP)
(72) Inventor: OGURA, Sho, Tokyo 108-0075 (JP)
(74) Representative: D Young & Co LLP
(86) International application number: PCT/JP2022/014465
(87) International publication number: WO 2023/281863

(57) **Abstract**

An information processing device according to the present technology includes a selection processing unit that selects data to be used to generate a free viewpoint image according to an importance related to at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.

## Description

### TECHNICAL FIELD

The present technology relates to an information processing device, a method thereof, and a program, and more particularly, to a technical field of processing related to generation of a free viewpoint image in which an imaged subject can be viewed from an optional viewpoint in a three-dimensional space.

### BACKGROUND ART

There is known a technique for generating a free viewpoint image (also referred to as a free viewpoint video, a virtual viewpoint image (video), or the like) corresponding to an image that can be viewed from an optional viewpoint in the three-dimensional space on the basis of three-dimensional information representing an imaged subject in the three-dimensional space.

Patent Document 1 below can be cited as a related conventional technique. Patent Document 1 discloses a technique for distributing a multi-viewpoint video obtained by a plurality of cameras to a client PC via the Internet.

### CITATION LIST

### PATENT DOCUMENT

Patent Document 1: Japanese Patent Application Laid-Open No. 2013-183209

### SUMMARY OF THE INVENTION

### PROBLEMS TO BE SOLVED BY THE INVENTION

Here, images captured by a large number of cameras are used to generate a free viewpoint image. However, in order to save the captured images of all the cameras to generate the free viewpoint image, a huge memory capacity is required.

The present technology has been made in consideration of the above circumstances, and an object of the present technology is to reduce a saved data amount to generate a free viewpoint image.

### SOLUTIONS TO PROBLEMS

An information processing device according to the present technology includes a selection processing unit that selects data to be used to generate a free viewpoint image according to an importance related to at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.

As a result, for example, it is possible to save the captured image data for only the important scene of the plurality of scenes included in the event for the free viewpoint image generation or to save the captured image data for only the important viewpoint among the plurality of viewpoints for the free viewpoint image generation. Alternatively, it is possible to save the captured image data of the important scene to generate the free viewpoint image and to save the processing data, not the captured image data, of the unimportant scene to generate the free viewpoint image, for example.

Specifically, an information processing method according to the present technology is an information processing method in which the information processing device selects the data to be used to generate the free viewpoint image according to the importance related to at least one of the event or the viewpoint, as setting a plurality of pieces of captured image data obtained by imaging an event from a plurality of viewpoints and processing data obtained by, at least, executing processing related to the generation of the three-dimensional information of the subject on captured image data as selection target data.

Moreover, a program according to the present technology is a program that is readable by a computer device, the program causing the computer device to realize a function of selecting data to be used to generate a free viewpoint image according to an importance of at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.

With these information processing method and the program, it is possible to implement the information processing device according to the present technology described above.

### BRIEF DESCRIPTION OF DRAWINGS

Fig. 1 is a block diagram of a system configuration according to an embodiment of the present technology.
Fig. 2 is an explanatory diagram of an arrangement example of cameras configured to generate a free viewpoint image according to the embodiment.
Fig. 3 is a block diagram of a hardware configuration of an information processing device according to the embodiment.
Fig. 4 is an explanatory diagram of functions of an image creation controller according to the embodiment.
Fig. 5 is an explanatory diagram of functions of a free viewpoint image server according to the embodiment.
Fig. 6 is an explanatory diagram of a viewpoint in the free viewpoint image according to the embodiment.
Fig. 7 is an explanatory diagram of an outline of a generation operation screen according to the embodiment.
Fig. 8 is an explanatory diagram of an outline of a path creation screen according to the embodiment.
Fig. 9 is an explanatory diagram of an output clip according to the embodiment.
Fig. 10 is an explanatory diagram of an output clip including a still image FV clip according to the embodiment.
Fig. 11 is an explanatory diagram of an output clip including a moving image FV clip according to the embodiment.
Fig. 12 is an explanatory diagram of an example of an image of the output clip according to the embodiment.
Fig. 13 is an explanatory diagram of a work procedure of clip creation according to the embodiment.
Fig. 14 is an explanatory diagram of a work procedure of camera movement detection according to the embodiment.
Fig. 15 is an explanatory diagram of a data flow related to free viewpoint image generation according to the embodiment.
Fig. 16 is an explanatory diagram about silhouette image data.
Fig. 17 is a diagram illustrating a 3D data image corresponding to a subject illustrated in Fig. 16.
Fig. 18 is a diagram illustrating an image of polygon mesh data.
Fig. 19 is a flowchart illustrating a processing procedure example corresponding to a first example and a second example of a saved data selection method as the embodiment.
Fig. 20 is a flowchart illustrating a processing procedure example corresponding to a third example of the saved data selection method as the embodiment.

### MODE FOR CARRYING OUT THE INVENTION

Hereinafter, embodiments will be described in the following order.
<1. System Configuration>
<2. Configurations of Image Creation Controller and Free Viewpoint Image Server>
<3. Outline of GUI>
<4. Clip Including Free Viewpoint Image>
<5. Clip Creation Processing>
<6. Camera Movement Detection>
<7. Data Flow Related to Free Viewpoint Image Generation>
<8. Saved Data Selection Method as Embodiment>
<9. Processing Procedure>
<10. Modified Examples>
<11. Summary of Embodiment>
<12. Present Technology>

### <1. System Configuration>

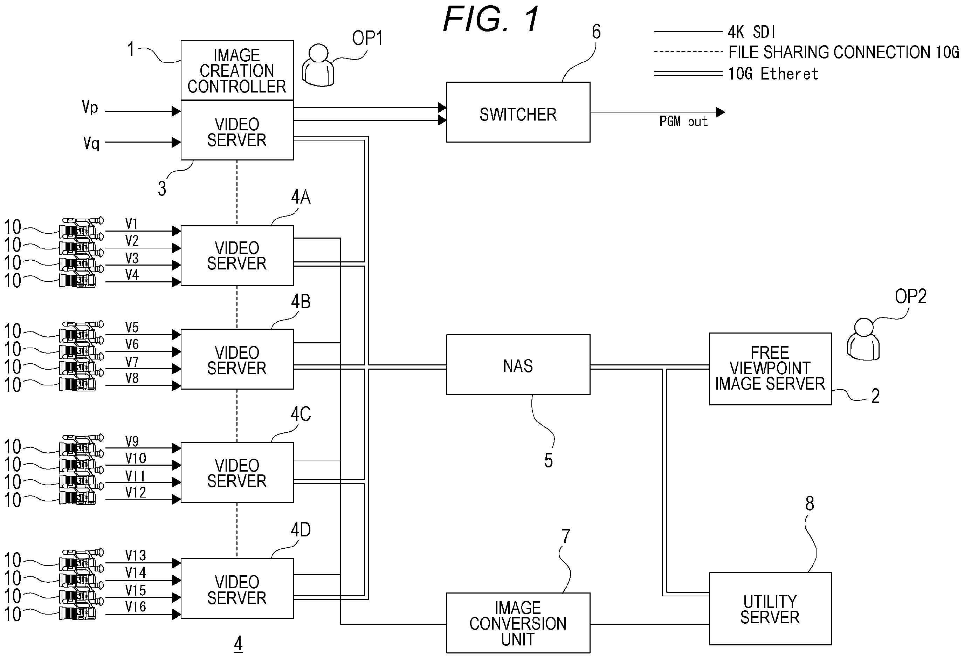

Fig. 1 illustrates a configuration example of an image processing system according to an embodiment of the present technology.

The image processing system includes an image creation controller 1, a free viewpoint image server 2, a video server 3, a plurality of (for example, four) video servers 4A, 4B, 4C, and 4D, a network attached storage (NAS) 5, a switcher 6, an image conversion unit 7, a utility server 8, and a plurality of (for example, 16) imaging devices 10.

Note that, hereinafter, the term "camera" refers to the imaging device 10. For example, "camera arrangement" means arrangement of the plurality of imaging devices 10.

Furthermore, when the video servers 4A, 4B, 4C, and 4D are collectively referred to without being particularly distinguished from each other, the video servers are referred to as "video servers 4".

In this image processing system, a free viewpoint image corresponding to an image viewed from an optional viewpoint in the three-dimensional space can be generated on the basis of captured images (for example, image data V1 to V16) acquired from the plurality of imaging devices 10, and an output clip including the free viewpoint image can be created.

In Fig. 1, a connection state of each of the units is indicated by a solid line, a broken line, and a double line.

The solid line indicates connection of a serial digital interface (SDI) which is an interface standard for connecting broadcast devices such as a camera or a switcher, and for example, supports 4K. Image data is mainly transmitted and received between the devices by SDI wiring.

The double line indicates connection of a communication standard for constructing a computer network, for example, 10 Gigabit Ethernet or the like. The image creation controller 1, the free viewpoint image server 2, the video servers 3, 4A, 4B, 4C, and 4D, the NAS 5, and the utility server 8 are connected by a computer network to allow image data and various types of control signals to be transmitted and received to and from each other.

A broken line between the video servers 3 and 4 indicates a state in which the video servers 3 and 4 having an inter-server file sharing function are connected via, for example, a 10G network. As a result, between the video server 3 and the video servers 4A, 4B, 4C, and 4D, each video server can preview and send materials in the other video servers. That is, a system using a plurality of video servers is constructed, and efficient highlight editing and sending can be realized.

Each imaging device 10 is configured as, for example, a digital camera device having an imaging element such as a charge coupled devices (CCD) sensor or a complementary metal-oxide-semiconductor (CMOS) sensor, and obtains captured images (image data V1 to V16) as digital data. In the present example, each imaging device 10 obtains a captured image as a moving image.

In the present example, each imaging device 10 captures an image of a scene in which a competition such as basketball, soccer, or golf is being held, and each imaging device is arranged in a predetermined direction at a predetermined position in a competition site where the competition is held. In the present example, the number of imaging devices 10 is 16, but the number of imaging devices 10 is only required to be at least two or more to enable generation of a free viewpoint image. By increasing the number of imaging devices 10 and imaging a target subject from many angles, accuracy of three-dimensional restoration of the subject can be improved, and an image quality of a virtual viewpoint image can be improved.

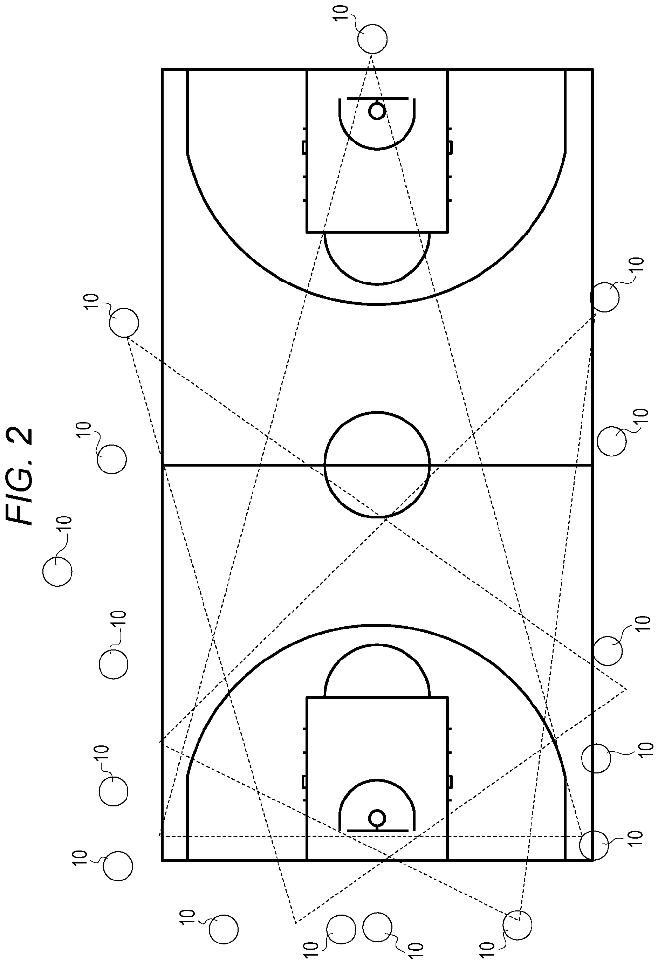

Fig. 2 illustrates an arrangement example of the imaging devices 10 around a basketball court. It is assumed that o be the imaging device 10. For example, this is a camera arrangement example in a case where it is desired to mainly image the vicinity of a goal on the left side in the drawing. Needless to say, the arrangement and the number of cameras are examples, and should be set according to content and a purpose of imaging and broadcasting.

Furthermore, an event to be a free viewpoint image generation target is not limited to sports such as a basketball competition and includes variety of events.

The image creation controller 1 includes an information processing device. This image creation controller 1 can be realized by using, for example, a dedicated workstation, a general-purpose personal computer, a mobile terminal device, or the like.

The image creation controller 1 performs control/operation management of the video servers 3 and 4 and executes processing for creating a clip.

As an example, the image creation controller 1 is a device that can be operated by an operator OP1. The operator OP1 instructs, for example, to select, to create clip content, or the like.

The free viewpoint image server 2 is configured as an information processing device that actually executes processing for creating a free viewpoint image (free view (FV) clip to be described later) in response to the instruction or the like from the image creation controller 1. This free viewpoint image server 2 can be realized by using, for example, a dedicated workstation, a general-purpose personal computer, a mobile terminal device, or the like.

As an example, the free viewpoint image server 2 is a device that can be operated by an operator OP2. The operator OP2 performs, for example, a work related to the creation of the FV clip as a free viewpoint image. Specifically, the operator OP2 performs an operation for designating (selection operation) a camera path for generating the free viewpoint image, or the like. Furthermore, in the present example, the operator OP2 also performs a camera path creation work.

Here, information regarding the camera path is information including at least information indicating a movement trajectory of a viewpoint in the free viewpoint image. For example, in a case of creating the free viewpoint image in which a position of the viewpoint, a line-of-sight direction, and an angle of view (focal distance) are changed with respect to a subject for which 3D data to be described later has been generated, the camera path information is parameters necessary for defining the movement trajectory of the viewpoint, the changing manner of the line-of-sight direction, and a change mode of the angle of view.

Configurations and processing of the image creation controller 1 and the free viewpoint image server 2 will be described later in detail. Furthermore, it is assumed that the operators OP1 and OP2 perform operations, but for example, the image creation controller 1 and the free viewpoint image server 2 may be arranged side by side and operated by one operator.

Each of the video servers 3 and 4 is an image recording device, and includes, for example, a data recording unit such as a solid state drive (SSD) or a hard disk drive (HDD), and a control unit that performs data recording/reproducing control for the data recording unit.

The video servers 4A, 4B, 4C, and 4D each can perform, for example, four-line inputs, and simultaneously record captured images of the four imaging devices 10.

For example, the video server 4A records the image data V1 to V4. The video server 4B records the image data V5 to V8. The video server 4C records the image data V9 to V12. The video server 4D records the image data V13 to V16.

As a result, all the captured images of the 16 imaging devices 10 are simultaneously recorded.

The video servers 4A, 4B, 4C, and 4D perform constant recording, for example, during a sports game to be broadcasted.

The video server 3 is, for example, directly connected to the image creation controller 1, and can perform, for example, two-line inputs and two-line outputs. Pieces of image data Vp and Vq are illustrated as inputs of two lines. As the pieces of image data Vp and Vq, captured images of any two imaging devices 10 (any two pieces of image data V1 to V16) can be selected. Needless to say, the captured image may be a captured image of another imaging device.

The image creation controller 1 can display the image data Vp and Vq on a display as monitor images. The operator OP1 can confirm a situation of a scene captured and recorded for broadcasting, for example, according to the image data Vp and Vq input to the video server 3.

Furthermore, because the video servers 3 and 4 are connected in a file sharing state, the image creation controller 1 can monitor and display the captured image of each of the imaging devices 10 recorded in the video servers 4A, 4B, 4C, and 4D, and the operator OP1 can sequentially check the captured images.

Note that, in the present example, a time code is attached to a captured image captured by each imaging device 10, and frames can be synchronized in processing in the video servers 3, 4A, 4B, 4C, and 4D.

The NAS 5 is a storage device arranged on a network, and includes, for example, an SSD, an HDD, or the like. In a case of the present example, when a part of the frames in the image data V1, V2, ..., and V16 recorded in the video servers 4A, 4B, 4C, and 4D is transferred to the NAS 5 for free viewpoint image generation, the NAS 5 is a device that stores the transferred frames for processing in the free viewpoint image server 2 or stores the created free viewpoint image.

The switcher 6 is a device that inputs images output via the video server 3 and selects a main line image PGMout to be finally selected and broadcasted. For example, a broadcast director or the like performs a necessary operation.

The image conversion unit 7 performs, for example, resolution conversion and composition of image data by the imaging device 10, generates a monitoring image of the camera arrangement, and supplies the monitoring image to the utility server 8. For example, 16-line image data (V1 to V16) to be 4K images are converted into four-line images arranged in a tile shape after resolution conversion into HD images, and the four-line images are supplied to the utility server 8.

The utility server 8 is a computer device that can execute various types of related processing, and in a case of the present example, the utility server 8 is a device that particularly executes processing for detecting camera movement for calibration. For example, the utility server 8 monitors the image data from the image conversion unit 7 to detect the camera movement. The camera movement is, for example, movement of an arrangement position of any one of the imaging devices 10 arranged as illustrated in Fig. 2. The information regarding the arrangement position of the imaging devices 10 is an important element for generating the free viewpoint image, and it is necessary to set a parameter again when the arrangement position changes. Therefore, the camera movement is monitored.

### <2. Configurations of Image Creation Controller and Free Viewpoint Image Server>

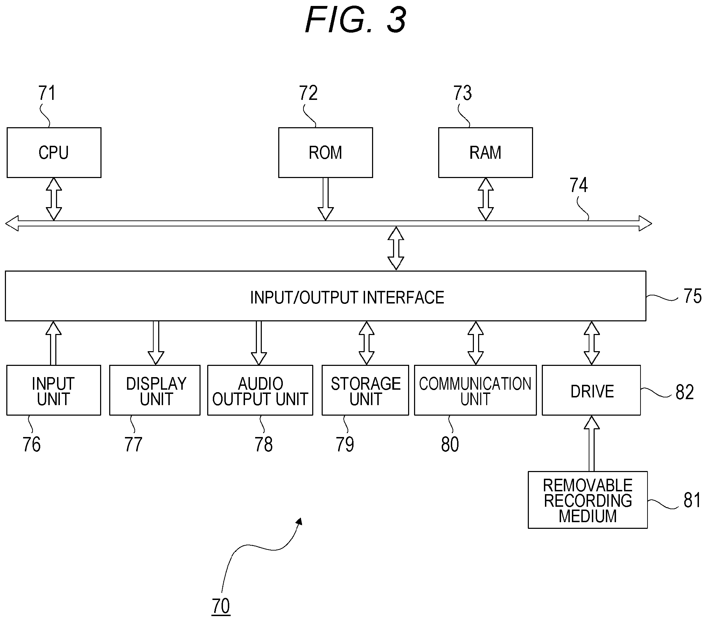

The image creation controller 1, the free viewpoint image server 2, the video servers 3 and 4, and the utility server 8 having the above configuration can be realized as an information processing device 70 having a configuration illustrated, for example, in Fig. 3.

In Fig. 3, a central processing unit (CPU) 71 of the information processing device 70 executes various types of processing according to a program stored in a read only memory (ROM) 72 or a program loaded from a storage unit 79 to a random access memory (RAM) 73. Furthermore, the RAM 73 also appropriately stores data or the like necessary for the CPU 71 to execute the various types of processing.

The CPU 71, the ROM 72, and the RAM 73 are connected to one another via a bus 74. Furthermore, an input/output interface 75 is also connected to the bus 74.

An input unit 76 including an operation element and an operation device is connected to the input/output interface 75.

For example, as the input unit 76, various types of operation elements and operation devices such as a keyboard, a mouse, a key, a dial, a touch panel, a touch pad, a remote controller, or the like are assumed.

A user operation is detected by the input unit 76, and a signal in response to the input operation is interpreted by the CPU 71.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various types of displays, and includes, for example, a display device provided in a housing of the information processing device 70, a separate display device connected to the information processing device 70, or the like.

The display unit 77 executes display of an image for various types of image processing, a moving image to be processed, or the like on a display screen on the basis of an instruction from the CPU 71. In addition, the display unit 77 displays various types of operation menus, icons, messages, or the like, that is, displays as a graphical user interface (GUI) on the basis of the instruction from the CPU 71.

In some cases, the storage unit 79 including a hard disk, a solid-state memory, or the like, and a communication unit 80 including a modem or the like is connected to the input/output interface 75.

The communication unit 80 executes communication processing via a transmission path such as the Internet or performs wired/wireless communication with various types of devices, communication using bus communication, or the like.

Furthermore, a drive 82 is also connected to the input/output interface 75 as necessary, and a removable recording medium 81 such as a magnetic disk, an optical disk, a magneto-optical disk, or a semiconductor memory is appropriately mounted.

The drive 82 can read a data file such as an image file MF, various types of computer programs, or the like from the removable recording medium 81. The read data file is stored in the storage unit 79, and images and sound included in the data file are output by the display unit 77 and the audio output unit 78. Furthermore, the computer programs or the like read from the removable recording medium 81 are installed in the storage unit 79, as necessary.

In the information processing device 70, software can be installed through network communication by the communication unit 80 or the removable recording medium 81. Alternatively, the software may be stored in advance in the ROM 72, the storage unit 79, or the like.

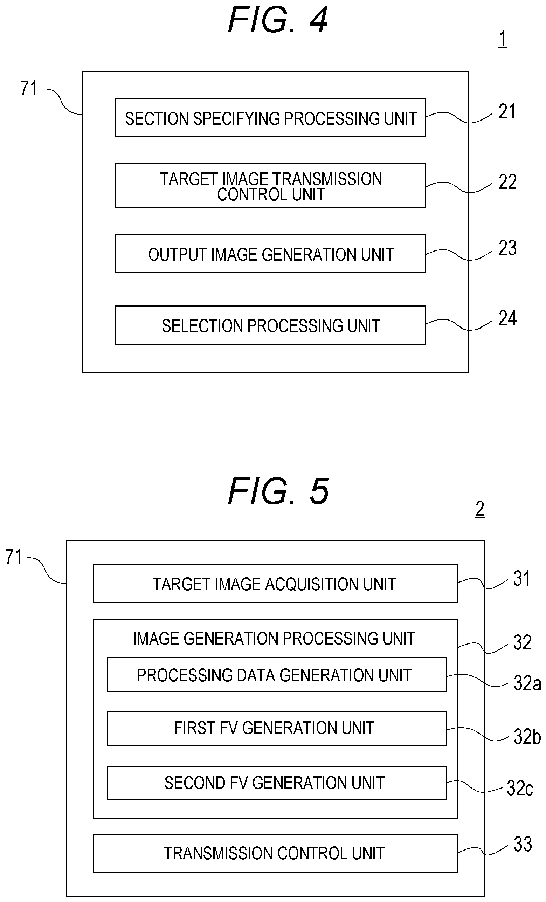

In a case where the image creation controller 1 and the free viewpoint image server 2 are realized using such an information processing device 70, processing functions as illustrated in Figs. 4 and 5 are realized in the CPU 71 by, for example, software.

Fig. 4 illustrates a section specifying processing unit 21, a target image transmission control unit 22, an output image generation unit 23, and a selection processing unit 24 as the functions formed in the CPU 71 of the information processing device 70 serving as the image creation controller 1.

The section specifying processing unit 21 executes processing for specifying a generation target image section as a generation target of the free viewpoint image for the plurality of captured images (image data V1 to V16) simultaneously captured by the plurality of imaging devices 10. For example, in response to an operation by the operator OP1 for selecting a scene to be replayed in the image, processing for specifying a time code for the scene, particularly a section (generation target image section) of the scene to be the free viewpoint image, and notifying the free viewpoint image server 2 of the time code is executed.

For confirmation, for example, a case where the free viewpoint image is generated during broadcasting (under temporal constraints) in order to obtain a distribution image during broadcasting such as a replay image and a case where the free viewpoint image is generated later (with sufficient time) on the basis of recorded data after broadcasting are assumed. It is considered, for example, to use the free viewpoint image generated after broadcasting for news programs or to save the free viewpoint image as archive content, or the like.

In the following description, it is assumed that the free viewpoint image be generated during broadcasting unless otherwise specified.

Here, the generation target image section described above indicates a frame section actually to be the free viewpoint image. In a case where a free viewpoint image is generated for one frame in a moving image, the one frame is the generation target image section. In this case, an in-point (start point)/an out-point (end point) for the free viewpoint image have the same time code.

Furthermore, in a case where a free viewpoint image is generated for a section of a plurality of frames in a moving image, the plurality of frames is the generation target image section. In this case, the in-point/out-point for the free viewpoint image have different time codes.

Note that, although a structure of the clip is described later, it is assumed that the in-point/out-point of the generation target image section are different from the in-point/out-point as an output clip to be finally generated. This is because a previous clip and a subsequent clip, which are described later, are coupled.

The target image transmission control unit 22 performs control to transmit the image data of the generation target image section of each of the plurality of imaging devices 10, that is, one or the plurality of frames of the image data V1 to V16, as the image data used to generate the free viewpoint image by the free viewpoint image server 2. Specifically, control is performed to transfer the image data as the generation target image section from the video servers 4A, 4B, 4C, and 4D to the NAS 5.

The output image generation unit 23 executes processing for generating an output image (output clip) including the free viewpoint image (FV clip) generated and received by the free viewpoint image server 2.

For example, by the processing of the output image generation unit 23, the image creation controller 1 combines the previous clip being an actual moving image at a previous time point, and a subsequent clip being an actual moving image at a subsequent time point, with the FV clip being a virtual image generated by the free viewpoint image server 2, on a time axis to obtain the output clip. That is, the previous clip, the FV clip, and the subsequent clip are set as one output clip.

Needless to say, the previous clip and the FV clip may be set as one output clip.

Alternatively, the FV clip and the subsequent clip may be set as one output clip.

Moreover, an output clip that includes only the FV clip may be generated without combining the previous clip and the subsequent clip.

In any case, the image creation controller 1 generates the output clip including the FV clip, outputs the output clip to the switcher 6, and allows the output clip to be used for broadcasting.

The selection processing unit 24 selects data to be used to generate the free viewpoint image.

Note that details of processing executed by the CPU 71 of the image creation controller 1 as the selection processing unit 24 will be described later.

Fig. 5 illustrates a target image acquisition unit 31, an image generation processing unit 32, and a transmission control unit 33 as functions formed in the CPU 71 of the information processing device 70 to be the free viewpoint image server 2.

The target image acquisition unit 31 executes processing for acquiring image data in the generation target image section as a generation target of the free viewpoint image for each of the plurality of captured images (image data V1 to V16) simultaneously captured by the plurality of imaging devices 10. That is, the image creation controller 1 is allowed to acquire image data of one frame or the plurality of frames specified by the in-point and the out-point of the generation target image section specified by the function of the section specifying processing unit 21 from the video servers 4A, 4B, 4C, and 4D via the NAS 5 and to use the image data to generate the free viewpoint image.

For example, the target image acquisition unit 31 acquires image data of one frame or the plurality of frames of the generation target image section for all pieces of the image data V1 to V16. The reason why the image data of the generation target image section is acquired for all the pieces of the image data V1 to V16 is to generate a high-quality free viewpoint image. As described above, the free viewpoint image can be generated by using captured images of at least two or more imaging devices 10. However, by increasing the number of imaging devices 10 (that is, the number of viewpoints), a finer subject three-dimensional information can be generated and a high-quality free viewpoint image can be generated.

The image generation processing unit 32 has a function of generating the free viewpoint image, that is, the FV clip in a case of the present example, using the image data acquired by the target image acquisition unit 31.

In the present example, the image generation processing unit 32 can generate the free viewpoint image by a view dependent player (VDP) method or a view independent player (VIDP) method.

The VDP method is a method for generating a free viewpoint image by pasting a texture image according to a viewpoint, to 3D data generated through visual hull from captured image data of a plurality of viewpoints. In the VDP method, it is necessary to prepare an image for each viewpoint, as the texture image.

The VIDP method is a method for generating a 3D model of a subject as polygon mesh data from the captured image data of the plurality of viewpoints and generating a texture image as a UV map texture so as to generate a free viewpoint image by computer graphics (CG) on the basis of the polygon mesh data and the UV map texture. Here, the UV map texture means two-dimensional data obtained by UV developing the 3D model by polygon meshes that is data indicating color information for each polygon (for example, triangle).

Note that the 3D data by the visual hull and the 3D model by the polygon meshes will be described later.

The image generation processing unit 32 includes a processing data generation unit 32a, a first FV generation unit 32b, and a second FV generation unit 32c, as functional units to generate the free viewpoint image with the VDP method or the VIDP method as described above.

The processing data generation unit 32a executes processing related to generation of three-dimensional information of the subject, on the basis of the image data V1 to V16. Specifically, the processing data generation unit 32a executes processing for generating the 3D data by the visual hull described above or generating the 3D model as the polygon mesh, and generates silhouette image data to be described later, generates 3D data on the basis of the silhouette image data, generates a 3D model or generates a UV map texture on the basis of the 3D data, or the like.

Note that a specific example of a method for generating the silhouette image data, the 3D data, and the 3D model will be described later.

The first FV generation unit 32b represents a function for generating the free viewpoint image with the VDP method, and the second FV generation unit 32c represents a function for generating the free viewpoint image with the VIDP method.

Specifically, the first FV generation unit 32b generates the free viewpoint image with the VDP method on the basis of the 3D data generated by the processing data generation unit 32a and the texture image for each viewpoint.

The second FV generation unit 32c generates the free viewpoint image with the VIDP method on the basis of the 3D model (polygon mesh data) generated by the processing data generation unit 32a and the UV map texture.

Note that, hereinafter, to generate a free viewpoint image that is a two-dimensional image from the 3D data or the 3D model as the three-dimensional information may be referred to as "rendering".

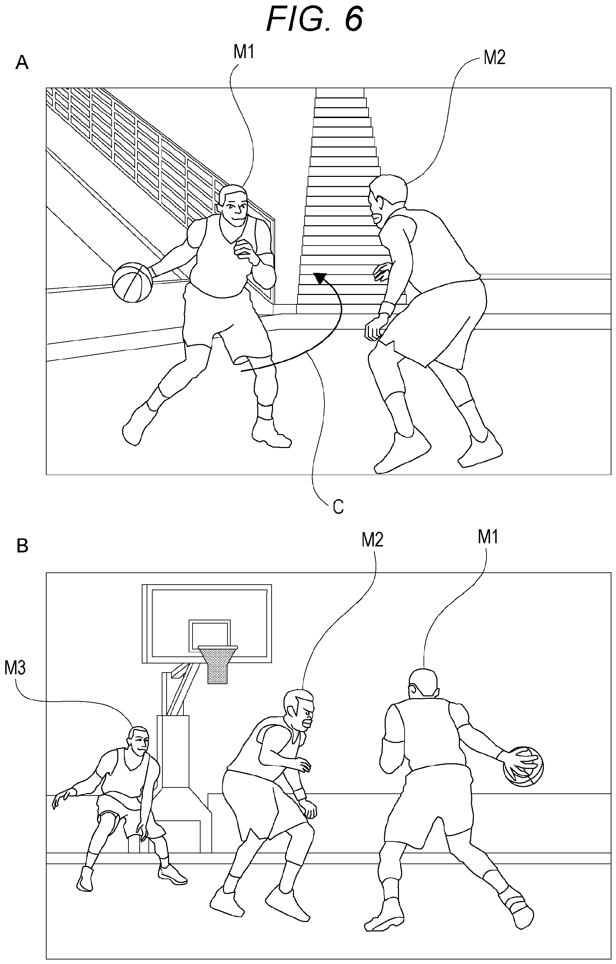

The viewpoint of the free viewpoint image will be described with reference to Fig. 6.

Fig. 6A illustrates an image of the free viewpoint image capturing a subject from a required viewpoint set in a three-dimensional space. In the free viewpoint image in this case, a subject M1 is viewed substantially from the front, and a subject M2 is viewed substantially from the back.

Fig. 6B illustrates an image of a virtual viewpoint image in a case where the position of the viewpoint is changed in a direction of an arrow C in Fig. 6A and a viewpoint for viewing the subject M1 substantially from the back is set. In the free viewpoint image in Fig. 6B, the subject M2 is viewed substantially from the front, and a subject M3 and a basket goal, which are not viewed in Fig. 6A, are viewed.

For example, an image of about one second to two seconds in which the viewpoint is gradually moved in the direction of the arrow C from the state in Fig. 6A to be the state in Fig. 6B is generated as the free viewpoint image (FV clip). Needless to say, a time length of the FV clip as the free viewpoint image and a trajectory of viewpoint movement can be variously considered.

In Fig. 5, the transmission control unit 33 performs control to transmit the free viewpoint image (FV clip) generated by the image generation processing unit 32 to the image creation controller 1 via the NAS 5. In this case, the transmission control unit 33 also performs control to transmit accompanying information for output image generation to the image creation controller 1. The accompanying information is assumed to be information designating images of the previous clip and the subsequent clip. That is, the accompanying information is information designating which image of the image data V1 to V16 is used to create the previous clip and the subsequent clip. The accompanying information is also assumed to be information designating time lengths of the previous clip and the subsequent clip.

Here, the CPU 71 of the free viewpoint image server 2 executes processing for generating camera path information used to generate the free viewpoint image. When the free viewpoint image is created, a plurality of candidate camera paths is created (preset) in advance to cope with various scenes. In order to enable such creation of the camera path in advance, a software program for creating the camera path is installed in the free viewpoint image server 2 of the present example.

### <3. Outline of GUI>

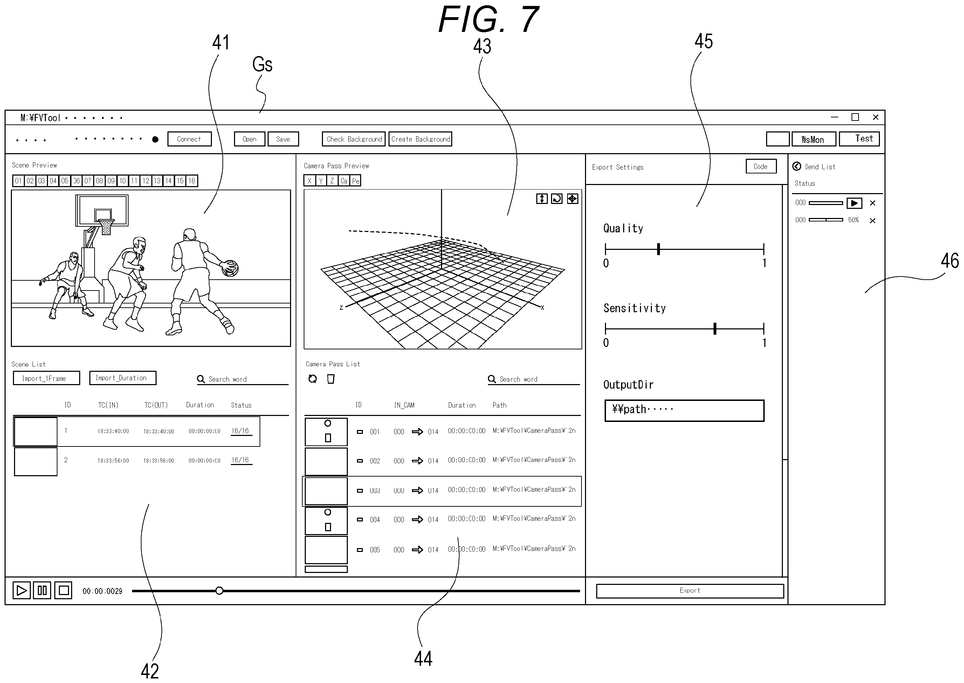

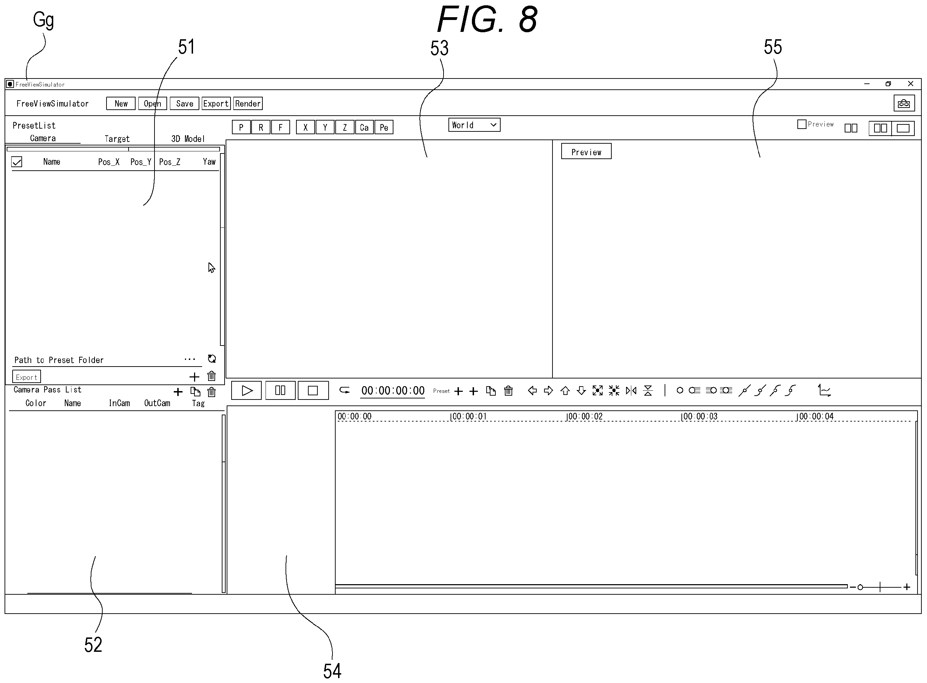

With reference to Figs. 7 and 8, an outline of a generation operation screen Gs used to generate a free viewpoint image and a path creation screen Gg used to create a camera path will be described. In the present example, the generation operation screen Gs and the path creation screen Gg are displayed, for example, on the display unit 77 of the free viewpoint image server 2, and can be confirmed and operated by the operator OP2.

In the generation operation screen Gs illustrated in Fig. 7, a scene window 41, a scene list display portion 42, a camera path window 43, a camera path list display portion 44, a parameter display portion 45, and a transmission window 46 are arranged.

In the scene window 41, for example, the image of the generation target image section is monitor-displayed, and the operator OP2 can confirm content of the scene from which the free viewpoint image is generated.

For example, a list of scenes designated as the generation target image section is displayed on the scene list display portion 42. The operator OP2 can select a scene to be displayed in the scene window 41, using the scene list display portion 42.

In the camera path window 43, a position of the arranged imaging device 10, a selected camera path, or a plurality of camera paths that can be selected, or the like is displayed.

As described above, the information regarding the camera path is information including at least the information indicating the movement trajectory of the viewpoint in the free viewpoint image. For example, in a case where a free viewpoint image of which a position of a viewpoint, a line-of-sight direction, and an angle of view are changed with respect to the subject is created, parameters necessary for determining a change mode of the movement trajectory of the viewpoint and the line-of-sight direction and the change mode of the angle of view are the information regarding the camera path.

In the camera path window 43, at least information visualizing and indicating the movement trajectory of the viewpoint is displayed as display of the camera path.

In the camera path list display portion 44, a list of information regarding various camera paths created and stored in advance is displayed. The operator OP2 can select and designate a camera path to be used to generate an FV clip, from among the camera paths displayed in the camera path list display portion 44.

Various types of parameters regarding the selected camera path are displayed in the parameter display portion 45.

In the transmission window 46, information regarding transmission of the created FV clip to the image creation controller 1 is displayed.

Subsequently, the path creation screen Gg in Fig. 8 will be described.

In the path creation screen Gg, a preset list display portion 51, a camera path list display portion 52, a camera path window 53, an operation panel portion 54, and a preview window 55 are arranged.

The preset list display portion 51 can selectively display a preset list of cameras, a preset list of targets, and a preset list of 3D models.

The preset list of cameras is list information of position information (position information in the three-dimensional space) of every camera preset by the user for a camera arrangement position at a site. In a case where the preset list of cameras is selected, a list of information indicating a position for every piece of camera identification information (for example, camera 1, camera 2, ..., and camera 16) is displayed in the preset list display portion 51.

Furthermore, in the preset list of targets, the target means a target position that determines the line-of-sight direction from the viewpoint in the free viewpoint image. In the generation of the free viewpoint image, the line-of-sight direction from the viewpoint is determined to face the target.

In a case where the preset list of targets is selected, the preset list display portion 51 displays a list of identification information regarding a target preset by the user and information indicating a position of the target.

Here, the target that determines the line-of-sight direction from the viewpoint in the free viewpoint image as described above is referred to as a "target Tg" below.

The preset list of 3D models is a preset list of 3D models to be displayed as a background of the camera path window 43, and in a case where the preset list of 3D models is selected, a list of identification information of the preset 3D models is displayed in the preset list display portion 51.

In the camera path list display portion 52, a list of information regarding a camera path created through the path creation screen Gg and information regarding a camera path to be newly created through the path creation screen Gg (information as entry) can be displayed.

In the camera path window 53, at least information visualizing and indicating the movement trajectory of the viewpoint is displayed as the display of the camera path.

The operation panel portion 54 is a region that receives various types of operation inputs in the camera path creation.

In the preview window 55, an image viewed from the viewpoint is displayed. In a case where the operation for moving the viewpoint on the movement trajectory is performed, the images viewed from respective viewpoint positions on the movement trajectory are sequentially displayed in the preview window 55. Furthermore, in a case where an operation for designating a camera from the preset list of cameras is performed in a state where the preset list of cameras is displayed in the preset list display portion 51, the image viewed from the arrangement position of the camera is displayed in the preview window 55 of the present example.

For example, the user such as the operator OP2 can use such a path creation screen Gg and create and edit the camera path while sequentially previewing content of the camera path (image content change accompanying viewpoint movement).

### <4. Clip Including Free Viewpoint Image>

Subsequently, the output clip including the FV clip as the free viewpoint image is described.

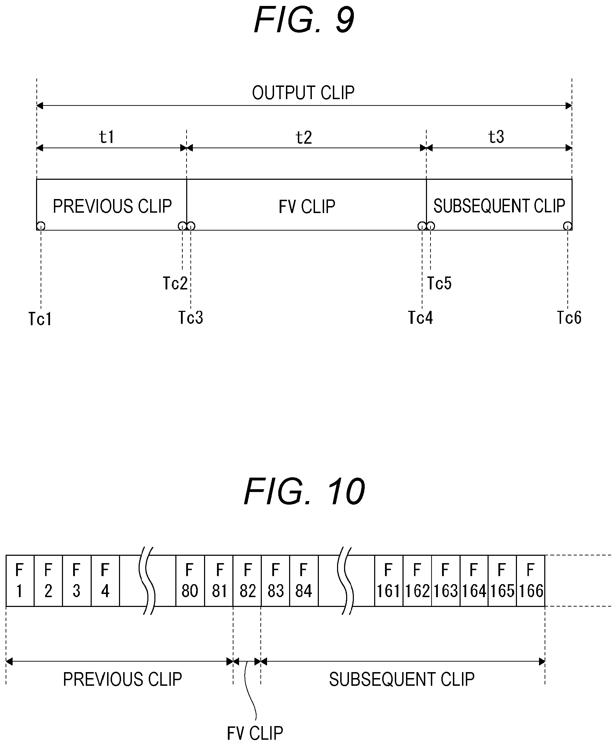

Fig. 9 illustrates a state where the previous clip, the FV clip, and the subsequent clip are combined and configured, as an example of the output clip.

For example, the previous clip is an actual moving image in a section from a time code TC1 to a time code TC2 in certain image data Vx among the image data V1 to the image data V16.

Furthermore, the subsequent clip is an actual moving image in a section from a time code TC5 to a time code TC6 in certain image data Vy among the image data V1 to the image data V16.

It is normally assumed that the image data Vx is image data of the imaging device 10 at the time of the start of the viewpoint movement in the FV clip, and the image data Vy is image data of the imaging device 10 at the end of the viewpoint movement in the FV clip.

Then, in this example, the previous clip is a moving image having a time length t1, the FV clip is a free viewpoint image having a time length t2, and the subsequent clip is a moving image having a time length t3. A reproduction time length of the entire output clip is t1 + t2 + t3. For example, the output clip for 5 seconds can have a configuration including a 1.5-second moving image, a two-second free viewpoint image, and a 1.5-second moving image, or the like.

Here, the FV clip is illustrated as a section of a time code TC3 to a time code TC4. However, there is a case that this corresponds or does not correspond to the number of frames of the actual moving image.

That is because the FV clip includes a case where the viewpoint is moved in a state where the time of the moving image is stopped (where TC3 = TC4) and a case where the viewpoint is moved without stopping the time of the moving image (where TC3 ≠ TC4).

For description, the FV clip in a case where the viewpoint is moved in a state where the time of the moving image is stopped (referred to as "time freeze") is referred to as a "still image FV clip", and the FV clip in a case where the viewpoint is moved without stopping the time of the moving image (referred to as "free run") is referred to as a "moving image FV clip".

Fig. 10 illustrates the still image FV clip with reference to the frames of the moving image. In a case of this example, the time codes TC1 and TC2 of the previous clip are respectively time codes of frames F1 and F81, and a time code of the following frame F82 is the time code TC3 = TC4 in Fig. 9. Then, the time codes TC5 and TC6 of the subsequent clip are time codes of frames F83 and F166.

That is, this is a case of generating a free viewpoint image in which the viewpoint moves with respect to a still image including one frame which is the frame F82.

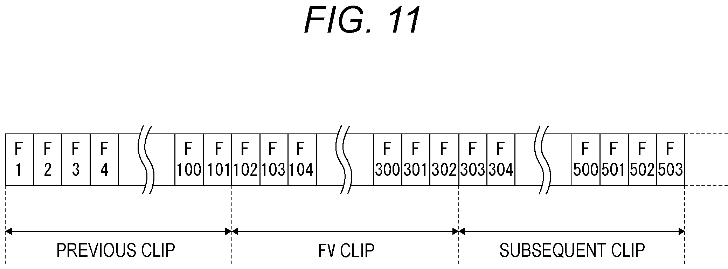

On the other hand, the moving image FV clip is as illustrated in Fig. 11. In a case of this example, the time codes TC1 and TC2 of the previous clip are respectively time codes of frames F1 and F101, and time codes of frames F102 and F302 are respectively the time codes TC3 and TC4 in Fig. 9. Then, the time codes TC5 and TC6 of the subsequent clip are respectively time codes of frames F303 and F503.

That is, this is a case of generating a free viewpoint image in which the viewpoint moves with respect to a moving image of a section including a plurality of frames from the frame F102 to the frame F302.

Therefore, the generation target image section determined by the image creation controller 1 is a section of one frame which is the frame F82 in a case of creating the still image FV clip in Fig. 10, and is a section of the plurality of frames from the frame F102 to the frame 302 in a case of creating the moving image FV clip in Fig. 11.

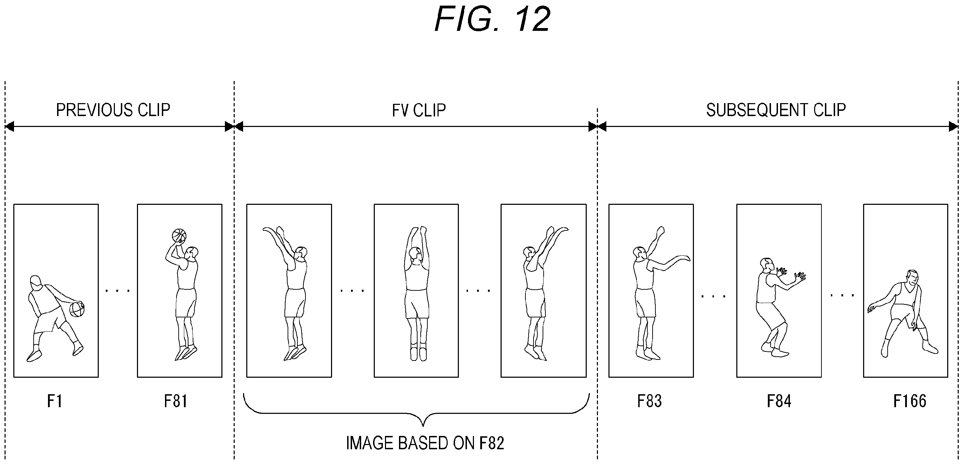

Fig. 12 illustrates an example of image content of the output clip, in the example of the still image FV clip in Fig. 10.

In Fig. 12, the previous clip is an actual moving image from the frame F1 to the frame F81. The FV clip is a virtual image in which a viewpoint is moved in a scene of the frame F82. The subsequent clip is an actual moving image from the frame F83 to the frame F166.

For example, the output clip including the FV clip is generated in this manner and used as an image to be broadcasted.

### <5. Clip Creation Processing>

An example of processing for creating an output clip executed in the image processing system in Fig. 1 will be described below. Here, processing of the image creation controller 1 and the free viewpoint image server 2 is mainly focused in description.

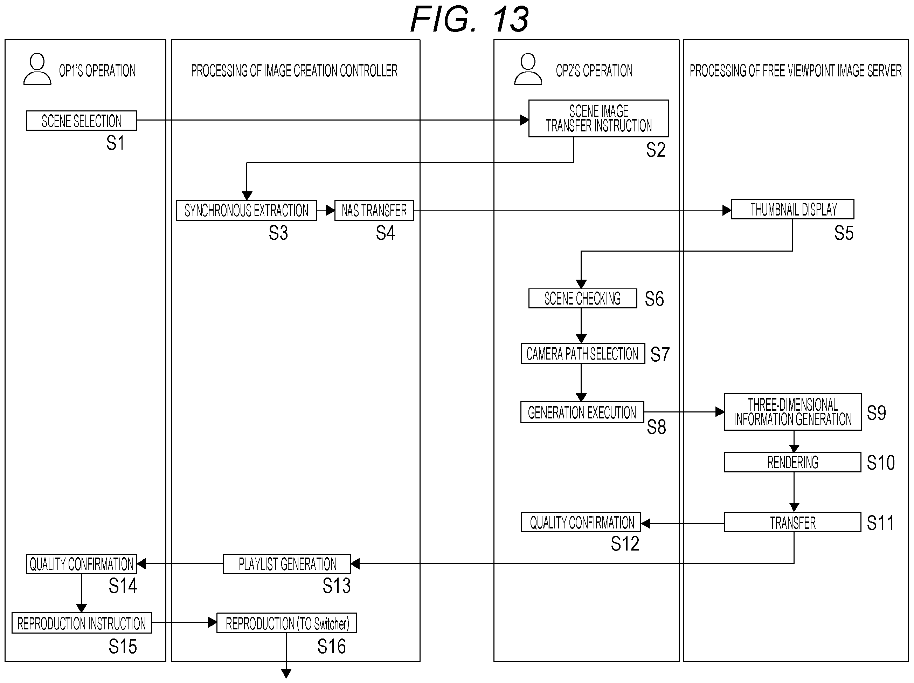

First, a flow of processing including operations of the operators OP1 and OP2 will be described with reference to Fig. 13. Note that the processing of the operator OP1 in Fig. 13 collectively illustrates GUI processing and an operator operation of the image creation controller 1. Furthermore, the processing of the operator OP2 collectively illustrates GUI processing and an operator operation of the free viewpoint image server 2.

### • Step S1: Scene selection

At the time of creating the output clip, first, the operator OP1 selects a scene to be an FV clip. For example, the operator OP1 searches for a scene desired to be the FV clip while monitoring the captured images displayed on the display unit 77 on the image creation controller 1 side. Then, a generation target image section of one frame or a plurality of frames is selected.

Information regarding the generation target image section is transmitted to the free viewpoint image server 2, and the operator OP2 can recognize the information by the GUI of the display unit 77 on the free viewpoint image server 2 side.

Specifically, the information regarding the generation target image section is information regarding the time codes TC3 and TC4 in Fig. 9. As described above, in a case of the still image FV clip, the time code TC3 = TC4.

### • Step S2: Scene image transfer instruction

In response to designation of the generation target image section, the operator OP2 performs an operation for instructing to transfer an image of the corresponding scene. In response to this operation, the free viewpoint image server 2 transmits a request for transmitting image data in the sections of the time codes TC3 and TC4 to the image creation controller 1.

### • Step S3: Synchronous extraction

In response to the image data transfer request, the image creation controller 1 controls the video servers 4A, 4B, 4C, and 4D, and causes the video servers 4A, 4B, 4C, and 4D to extract the sections of the time codes TC3 and TC4 for each of the 16 lines of image data from the image data V1 to the image data V16.

### • Step S4: NAS transfer

Then, the image creation controller 1 transfers the data in all the sections of the time codes TC3 and TC4 of the image data V1 to the image data V16 to the NAS 5.

### • Step S5: Thumbnail display

In the free viewpoint image server 2, thumbnails of the image data V1 to the image data V16 in the sections of the time codes TC3 and TC4 transferred to the NAS 5 are displayed.

### • Step S6: Scene checking

The operator OP2 checks scene content of the sections indicated by the time codes TC3 and TC4 using the generation operation screen Gs by the free viewpoint image server 2.

### • Step S7: Camera path selection

The operator OP2 selects (designates) a camera path that is considered to be appropriate on the generation operation screen Gs, according to the scene content.

### • Step S8: Generation execution

After selecting the camera path, the operator OP2 performs an operation for executing generation of the FV clip.

### • Step S9: Three-dimensional information generation

The free viewpoint image server 2 generates the three-dimensional information as the 3D data and the polygon mesh data of the subject, using the data of the frames of the sections of the time codes TC3 and TC4 in each piece of the image data V1 to V16 and the parameter data such as the arrangement position of each imaging device 10 input in advance.

The parameter data of each imaging device 10 here is data including at least information regarding an external parameter and an internal parameter of each imaging device 10, and a focal distance.

### • Step S10: Rendering

The free viewpoint image server 2 generates a free viewpoint image based on the three-dimensional information and the parameter data of each imaging device 10. At this time, the free viewpoint image is generated to allow the viewpoint movement on the basis of the camera path selected in step S7 to be performed.

### • Step S11: Transfer

The free viewpoint image server 2 transfers the generated FV clip to the image creation controller 1. At this time, not only the FV clip but also designation information of the previous clip and the subsequent clip and designation information of the time lengths of the previous clip and the subsequent clip can be transmitted as the accompanying information.

### • Step S12: Quality confirmation

Note that, on the free viewpoint image server 2 side, quality confirmation by the operator OP2 can be performed before or after the transfer in step S11. That is, the free viewpoint image server 2 reproduces and displays the generated FV clip on the generation operation screen Gs so that the operator OP2 can confirm the FV clip. In some cases, the operator OP2 is allowed to perform the generation of the FV clip again without executing the transfer.

### Step S13: Playlist generation

The image creation controller 1 generates an output clip by using the transmitted FV clip. In this case, one or both of the previous clip and the subsequent clip are combined to the FV clip on the time axis to generate the output clip.

The output clip may be generated as stream data in which each frame as the previous clip, each frame virtually generated as the FV clip, and each frame as the subsequent clip are actually combined in time series, but in this processing example, the frames are virtually combined as a playlist.

That is, the playlist is generated such that the frame section as the previous clip is reproduced, followed by reproduction of the FV clip, and thereafter, the frame section as the subsequent clip is reproduced, so that the output clip can be reproduced without generating stream data actually combined as the output clip.

### Step S14: Quality confirmation

The GUI on the image creation controller 1 side performs reproduction based on the playlist, and the operator OP1 checks the content of the output clip.

### Step S15: Reproduction instruction

The operator OP1 issues a reproduction instruction by a predetermined operation according to the quality confirmation. The image creation controller 1 recognizes input of the reproduction instruction.

### Step S16: Reproduction

In response to the reproduction instruction, the image creation controller 1 supplies the output clip to the switcher 6. As a result, the output clip can be broadcasted.

### <6. Camera Movement Detection>

In order to generate the free viewpoint image, the three-dimensional information of the subject is generated by using the image data V1, V2, ..., and V16. Therefore, the parameter including the position information of each imaging device 10 is important.

For example, in a case where a position of a certain imaging device 10 is moved or an imaging direction is changed in the pan direction, the tilt direction, or the like in the middle of broadcasting, parameter calibration according to that is required. Therefore, in the image processing system in Fig. 1, the utility server 8 detects the movement of the camera. Here, the movement of the camera means that at least one of the position or the imaging direction of the camera changes.

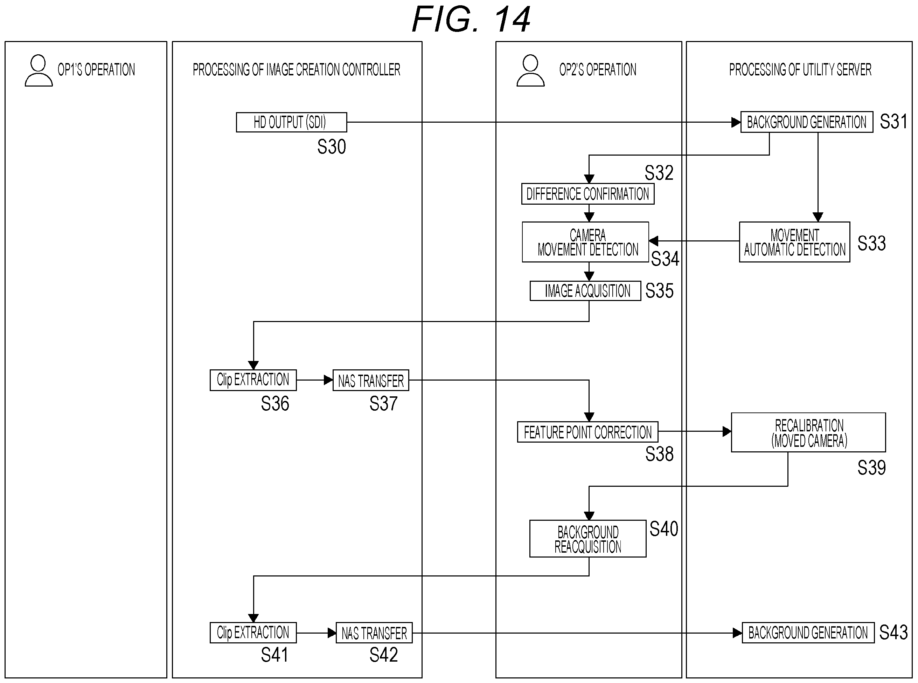

A processing procedure of the image creation controller 1 and the utility server 8 at the time of detecting the movement of the camera will be described with reference to Fig. 14. Note that, Fig. 14 illustrates a processing procedure in a format similar to that in Fig. 13. However, this is an example where the operator OP2 also performs an operation on the utility server 8.

### • Step S30: HD output

The image creation controller 1 performs control to output the image data from the video servers 4A, 4B, 4C, and 4D to the image conversion unit 7, for camera movement detection. Images from the video servers 4A, 4B, 4C, and 4D, that is, the images of the 16 imaging devices 10 are subjected to resolution conversion by the image conversion unit 7 and supplied to the utility server 8.

### • Step S31: Background generation

The utility server 8 generates a background image on the basis of the supplied image. Because the background image is an image that does not change unless the camera is not moved, for example, a background image excluding the subject such as a player is generated for the pieces of image data of 16 lines (V1 to V16).

### • Step S32: Difference confirmation

The background image is GUI displayed so that the operator OP2 can confirm a change in the image.

### • Step S33: Movement automatic detection

The movement of the camera can also be automatically detected by executing processing for comparing the background images at the respective time points.

### • Step S34: Camera movement detection

As a result of step S33 or step S32 described above, a movement of a certain imaging device 10 is detected.

### • Step S35: Image acquisition

Calibration is required in response to the detection of the movement of the imaging device 10. Therefore, the utility server 8 requests the image creation controller 1 for the image data of the changed state.

### • Step S36: Clip extraction

The image creation controller 1 controls the video servers 4A, 4B, 4C, and 4D, in response to a request to acquire the image from the utility server 8 and extracts a clip about the image data V1 to V16.

### • Step S37: NAS transfer

The image creation controller 1 controls the video servers 4A, 4B, 4C, and 4D to transfer the image data extracted as the clip, to the NAS 5.

### • Step S38: Feature point correction

According to the transfer to the NAS 5, the utility server 8 can refer to or display the image in the state after the camera movement. The operator OP2 performs an operation necessary for calibration such as feature point correction.

### • Step S39: Recalibration

The utility server 8 re-executes calibration for creating the 3D model, using the image data (from V1 to V16) in the state after the camera movement.

### • Step S40: Background reacquisition

After the calibration, in response to the operation of the operator OP2, the utility server 8 requests reacquisition of image data for the background image.

### • Step S41: Clip extraction

The image creation controller 1 controls the video servers 4A, 4B, 4C, and 4D, in response to a request to acquire the image from the utility server 8 and extracts a clip about the image data V1 to V16.

### • Step S42: NAS transfer

The image creation controller 1 controls the video servers 4A, 4B, 4C, and 4D to transfer the image data extracted as the clip, to the NAS 5.

### • Step S43: Background generation

The utility server 8 generates a background image using the image data transferred to the NAS 5. This is, for example, a background image serving as a reference for subsequent camera movement detection.

For example, by performing the camera movement detection and the calibration as in the above procedure, for example, even in a case where the position or the imaging direction of the imaging device 10 is changed during broadcasting, the parameters are corrected accordingly, so that an accurate FV clip can be continuously generated.

### <7. Data Flow Related to Free Viewpoint Image Generation>

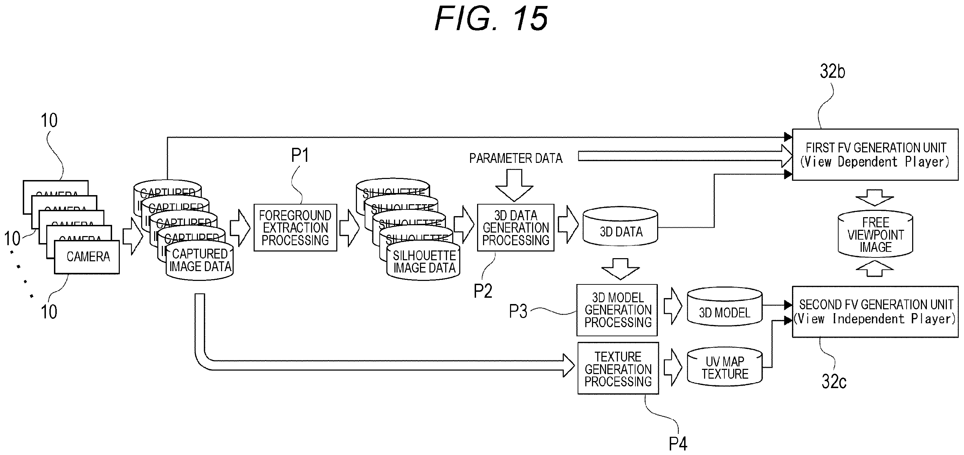

A data flow related to free viewpoint image generation according to the present embodiment will be described with reference to Fig. 15.

First, captured image data (image data V1 to V16 in the present example) for each imaging device 10 arranged at each viewpoint is obtained.

Here, as the imaging device 10 used to generate the free viewpoint image, there may be an imaging device 10 used to obtain a captured image used to generate 3D data (here, referred to as "camera for subject sensing") and an imaging device 10 used to obtain a texture image attached to the 3D data when the free viewpoint image is generated (here, referred to as "camera for texture").

For example, it is considered that some of all the imaging devices 10 used to generate the free viewpoint image are used as the cameras for subject sensing, and the other imaging devices 10 are used as the cameras for texture. Alternatively, the camera for subject sensing and the camera for texture do not necessarily need to be different imaging devices 10, and the single imaging device 10 can be used as both of the camera for subject sensing and the camera for texture. Moreover, all the imaging devices 10 can be used as such dual-use cameras.

When the 3D data is generated, foreground extraction processing P1 is executed, using captured image data obtained by each imaging device 10 as the camera for subject sensing (hereinafter, referred to as "captured image data for sensing"), and silhouette image data is generated.

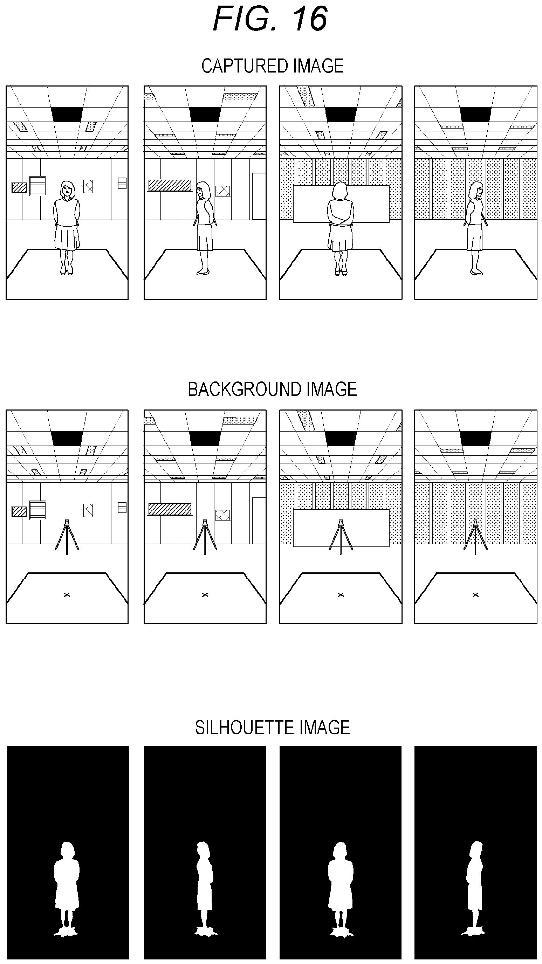

Fig. 16 is an explanatory diagram about the silhouette image data.

In the foreground extraction processing P1, a background as illustrated in the middle in Fig. 16 is generated for each camera for subject sensing, on the basis of the captured image data for sensing. When the free viewpoint image is generated, since a target subject is, for example, a moving subject such as a player, the background can be generated, for example, by extracting a difference between frames, or the like. By obtaining the difference between this background image and the captured image data for sensing, a foreground image in which an image portion of the target subject is extracted can be obtained for each camera for subject sensing.

Then, regarding these foreground images, for example, by generating image data in which an image region of the subject is set to "1" and other region is set to "0", silhouette image data indicating a silhouette of the subject, as illustrated in the lower part in Fig. 16 can be obtained for each viewpoint of the camera for subject sensing.

In Fig. 15, in 3D data generation processing P2, 3D data of the subject is generated by the visual hull, using the silhouette image data for each viewpoint and parameter data of each camera. The parameter data is data including an external parameter and an internal parameter of the camera (camera for subject sensing) and a focal distance as described above.

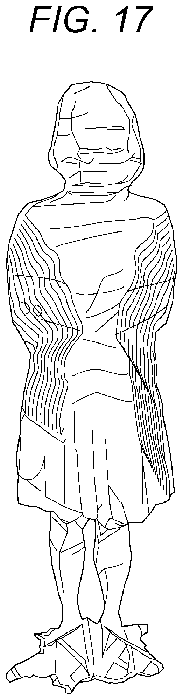

Fig. 17 illustrates an image of the 3D data corresponding to the subject illustrated in Fig. 16. The 3D data can be rephrased as data indicating a region of the subject in the three-dimensional space.

Here, the 3D data is not individually generated for each target subject, for example, each player or the like. In a case where a plurality of target subjects is captured in the field of view of the camera and the silhouette image data is data indicating silhouettes of the plurality of subjects, a single piece of 3D data indicating a three-dimensional image of the plurality of subjects is generated, according to the silhouette image data.

In Fig. 15, the 3D data is used to generate the free viewpoint image by the VDP method by the first FV generation unit 32b described above.

Specifically, the first FV generation unit 32b generates the free viewpoint image by the VDP method on the basis of the 3D data, the captured image data of the camera for texture, and the parameter data of the camera for texture.

Furthermore, the 3D data is used to generate a 3D model that enables to generate the free viewpoint image by the VIDP method described above.

Specifically, according to 3D model generation processing P3 in Fig. 15, polygon mesh data as the 3D model of the subject is generated from the 3D data. In the present example, the polygon mesh data is generated for each subject.

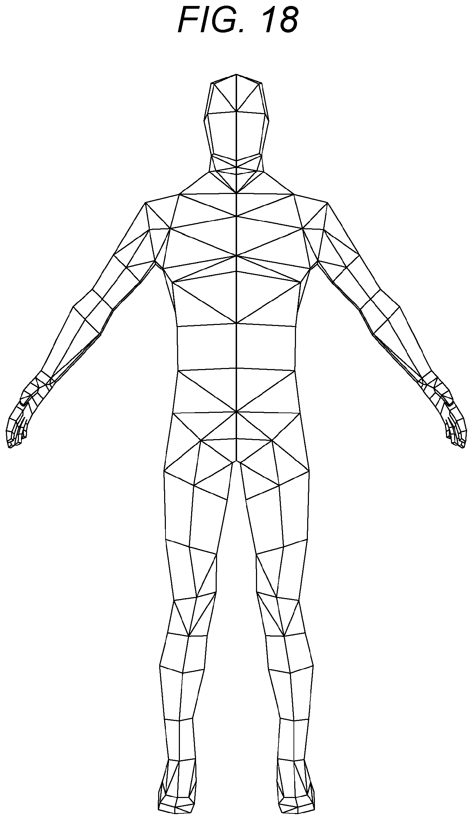

For reference, Fig. 18 illustrates an image of polygon mesh data for a certain subject.

Furthermore, the UV map texture described above is used to generate the free viewpoint image by the VIDP method. The UV map texture is generated on the basis of the captured image data of the camera for texture, according to texture generation processing P4 illustrated in Fig. 15.

In the texture generation processing P4 in the present example, the UV map texture is generated for each subject, in correspondence with that the polygon mesh data is generated for each subject in the 3D model generation processing P3.

The second FV generation unit 32c generates the free viewpoint image by the VIDP method, on the basis of the 3D model of the subject obtained by the 3D model generation processing P3 (polygon mesh data) and the UV map texture obtained by the texture generation processing P4.

In the data flow described above, the foreground extraction processing P1 to obtain the silhouette image data, the 3D data generation processing P2 for generating the 3D data from the silhouette image data, the 3D model generation processing P3 for generating the polygon mesh data as the 3D model from the 3D data, and the texture generation processing P4 for generating the UV map texture are executed by the CPU 71 of the free viewpoint image server 2, serving as the processing data generation unit 32a described above.

Here, since the VDP method is a method for pasting a texture image prepared for each viewpoint, the VDP method has an advantage such that degradation in an image quality of a free viewpoint image can be suppressed even in a case where 3D data to be pasted is coarse.

On the other hand, while the VIDP method has an advantage such that it is no need to prepare the texture image for each viewpoint, in a case where a polygon mesh is coarse, the coarse polygon mesh is reflected in the image quality of the free viewpoint image.

### <8. Saved Data Selection Method as Embodiment>

As understood from the description above, when the free viewpoint image is generated, the captured image data by a large number of imaging devices 10 is needed. However, in order to save the captured image data by all the imaging devices 10 to generate the free viewpoint image, a huge memory capacity is required.

As described above, for example, a case where the free viewpoint image is generated to obtain a distribution image during broadcasting such as a replay image and a case where the free viewpoint image is generated again on the basis of recorded data after broadcasting are considered. However, in particular, in a case where the free viewpoint image is generated again after broadcasting as the latter case, in order to enable to generate a free viewpoint image about an optional scene during a target event, it is necessary to save captured image data of all scenes in the event, and a saved data amount becomes enormous.

Therefore, in the present embodiment, a method for selecting data to be used to generate the free viewpoint image according to an importance related to at least one of the event or the viewpoint. Specifically, data to be used to generate the free viewpoint image is selected according to the importance related to at least one of the event or the viewpoint, setting a plurality of pieces of captured image data obtained by imaging the event from a plurality of viewpoints and processing data obtained by, at least, executing processing related to the generation of the three-dimensional information of the subject on the captured image data as selection target data.

In the present example, the selection processing unit 24 illustrated in Fig. 4 selects such data to be used to generate the free viewpoint image.

As the importance here, it is considered to use an importance of a scene included in an event.

As a specific example, it is considered to detect a specific predetermined scene such as shooting scene, a goal scene, a foul scene, a home run scene, or an ongoing play scene (period excluding play stopping period), as a high importance scene.

In this case, it is considered that the specific scene as the high importance scene is detected by image analysis on the captured image data captured by the imaging device 10. For example, a method using artificial intelligence (AI) learned to determine whether or not a scene is the specific scene, image analysis by template matching, or the like can be exemplified.

Alternatively, in a case where audio data synchronized with the captured image data is recorded by a microphone, it is considered to detect the specific scene by audio analysis on the audio data. For example, it is considered to detect a scene in which specific sound associated with the specific scene is detected as the specific scene.

It is considered to detect the specific scene by using both of the image analysis and the audio analysis.

Furthermore, in a case where the target event is, for example, a game of professional sports such as soccer, baseball, or American football or the like, it is considered to detect the specific scene on the basis of distribution information from a site that distributes statistics (stats) information regarding the game. Since thus stats information includes, for example, information specifying a type of play such as a shoot, a goal, or a home run and time information indicating when the play is performed, it is possible to detect the specific scene.

Furthermore, it is considered to detect the specific scene on the basis of posted information on a social networking service (SNS) on which information regarding the target event is posted. For example, in a case where the specific scene = a scene of a home run, it is considered to detect a time period when many posts including a keyword associated with the specific scene such as "oo hits home run!", as a time period of the specific scene.

Here, the specific scene as the high importance scene is not limited to a predetermined scene. For example, it is considered to set a scene in which audience is excited as the high importance scene. It is considered to detect this excited scene on the basis of the image analysis and the audio analysis on the captured image data captured by the imaging device 10 and the posted information on the SNS, for example. In a case of the image analysis, for example, it is considered to detect the excited scene on the basis of a movement of audience according to image analysis on a spectator seat portion, or the like. Furthermore, in a case of the audio analysis, it is considered to detect the excited scene on the basis of a volume or the like of cheers of the audience. Furthermore, as the detection based on the posted information on the SNS, for example, it is considered to detect a time period when the number of posts is increased (for example, time period when the number of posts per unit time is equal to or more than predetermined number), as a time period of the excited scene.

The selection processing unit 24 in the present example selects data to be used to generate the free viewpoint image, on the basis of the importance of the scene described above.

The data is selected in this case, as using the captured image data of the imaging device 10 (image data V in the present example) and the processing data obtained by executing at least the processing related to the generation of the three-dimensional information of the subject on the captured image data, as selection target data. Specifically, the selection processing unit 24 selects which one of the captured image data or the processing data to be used to generate the free viewpoint image, according to the importance.

The processing data here is the processing data generated by the processing data generation unit 32a described above. Specifically, in the present example, at least any one of the silhouette image data, the 3D data (by visual hull), the 3D model (polygon mesh data), or the UV map texture can be exemplified. Furthermore, the processing data may include the texture image to be pasted to the 3D data. In the present example, the first FV generation unit 32b generates the texture image. However, the processing data generation unit 32a may generate the texture image.

As described above, by selecting which one of the captured image data or the processing data is used to generate the free viewpoint image according to the importance, it is possible to select the captured image data in a case where the importance is high and to select the processing data in a case where the importance is low.

In a case where the processing data is selected as the data to be used to generate the free viewpoint image, there is a possibility that a degree of freedom in generating the free viewpoint image and an image quality are restricted, as compared with a case where the captured image data is selected. For example, in a case where the silhouette image data of only some viewpoints is selected as the processing data, there is a possibility that a degree of freedom of the camera path is restricted in posterior free viewpoint image generation after broadcasting. Furthermore, in a case where the 3D model and the UV map texture are selected as the processing data, the free viewpoint image can be generated with CG by the VIDP method. However, there is a possibility that there is a disadvantage in terms of image quality as compared with a case of the VDP method. Therefore, the captured image data can be selected in a case where the importance is high and the processing data can be selected in a case where the importance is low as described above so that it is possible to reduce the saved data amount by preventing the restriction in the degree of freedom in generating the free viewpoint image in a case where the importance is high and selecting the processing data with less saved data amount in a case where the importance is low. That is, while preventing the degree of freedom in generating the free viewpoint image from being impaired in a case where the importance is high, it is possible to reduce the saved data amount.

Here, regarding the selection target data of the data to be used to generate the free viewpoint image, the captured image data captured by the imaging device 10 is recorded in the video server 4 in the present example. On the other hand, since the processing data generation unit 32a included in the free viewpoint image server 2 generates the processing data in the present example, the processing data is recorded in the NAS 5.

In the present example, the selection processing unit 24 executes processing for generating management information so as to hold the data selected as the data to be used to generate the free viewpoint image from the selection target data according to the importance, in a recording medium that records the data, in a recorded state.

As a result, it is possible to reduce an appropriately saved data amount according to the importance, coping with a specification for generating the free viewpoint image using the captured image data and the processing data held in the single or the plurality of recording media (for example, recording medium such as video server 4 or NAS 5) in the recorded state.

Note that, although it is assumed that the processing data be recorded in the NAS 5 above, a specification is considered in which the processing data is recorded in the video server 3 or 4, instead of the NAS 5. In this case, the selection target data (captured image data or processing data) in the free viewpoint image generation is recorded in the video server 3 or 4. On the other hand, the data to be used to generate the free viewpoint image should be recorded in the NAS 5 used by the free viewpoint image server 2. Therefore, in this case, the selection processing unit 24 executes processing for outputting the data selected as the data to be used to generate the free viewpoint image from the selection target data according to the importance from the single or the plurality of recording media recording the data (here, one or both of video servers 3 and 4) to another recording medium (NAS 5 in the present example).

As a result, it is possible to reduce an appropriate saved data amount according to the importance, coping with a specification for generating the free viewpoint image by holding the data to be used to generate the free viewpoint image, among the captured image data and the processing data recorded in the single or the plurality of recording media, in the another recording medium. Specifically, in this case, it is possible to reduce the saved data amount in the another recording medium described above.

Here, the importance of the scene can be divided into three or more values. For example, regarding a shooting scene, for example, it is considered that a shooting scene with no score is set as importance = medium, a shooting scene in which a score is given is set as importance = high, and a scene other than the shooting scene is set as importance = low.

Alternatively, it is considered to separately detect an excitement degree of the audience about the specific scene such as the shooting scene, goal scene, foul scene, or home run scene and to classify the importance into low, medium, and high according to the excitement degree of the audience, for example.

For example, regarding the goal scene or the foul scene, it is considered to, for example, set the importance = medium if the excitement degree of the audience is low, set the importance = high if the excitement degree of the audience is high, and to set the importance = low in a scene other than the goal scene and the foul scene.

Furthermore, the importance can be determined on the basis of a user operation input. This is because the importance here is basically based on a viewpoint of whether the scene is a scene that the user desires to create a free viewpoint image again after broadcasting or the like.

In this case, the selection processing unit 24 receives an importance designation input from the user during broadcasting (during recording of captured image data). Then, in response to the importance designation input, an image section corresponding to a timing when the designation input is made (for example, image section with predetermined length including the timing) is determined as an image section of the target scene, captured image data and processing data in the image section are determined as the selection target data related to the free viewpoint image generation, and data to be used to generate the free viewpoint image is selected from the selection target data, according to the importance.

Note that the determination of the scene importance is not limited to be performed in real time. For example, to determine a scene in which a player selected for a best player after broadcasting is imaged as an important scene afterwards or the like can be exemplified.

Here, the importance is not limited to the importance related to the event such as the importance of the scene, and an importance related to a viewpoint can be exemplified.

Specifically, as the importance for each viewpoint, an importance based on an application of the camera (imaging device 10) arranged for each viewpoint and an importance based on an imaging target from the viewpoint can be exemplified.

As the application of the camera here, for example, the camera for subject sensing and the camera for texture described above can be exemplified. In this case, it is considered to determine the application for each camera on the basis of application identification information attached to each camera (information different between subject sensing and texture).

Alternatively, there is a case where a camera having characteristics different from the camera for subject sensing and the camera for texture is used, in that case, it is considered to determine the application for each camera on the basis of the characteristics of the camera. As an example, there is a case where a zoom-out camera including an infrared (IR) image sensor is used as the camera for subject sensing and a zoom-in camera including an RGB image sensor is used as the camera for texture, in that case, it is possible to determine the application for each camera from the type of the image sensor and the information regarding the angle of view.

As an example of the importance based on the imaging target from the viewpoint, for example, an importance in terms of a viewpoint whether or not a focused event is included in the field of view is exemplified.

As the focused event here, for example, a scene in which a player holding a ball is playing, a shooting scene, a goal scene, a foul scene, or the like in a case where the event is a ball game such as basketball, soccer, or American football can be exemplified.

Similarly to the determination of the specific scene above, it is possible to determine whether or not the focused event is included in the field of view on the basis of the image analysis on the captured image data. A camera determined to include the focused event in the field of view is determined as an important camera.

Alternatively, it is considered that, when the focused event occurs on a home court side, a camera that images the home court side is determined as an important camera and a camera that images an away court is determined as an unimportant camera, for example.

Here, the importance determination of the camera based on the viewpoint of whether or not the focused event is included in the field of view can be determination on the basis of a viewpoint of not only whether or not the focused event is included in the field of view but also how big the focused event is imaged in the field of view. Specifically, in a case where an image region size of a portion where the focused event occurs in the field of view (for example, image region size in which target subject is imaged) is equal to or less than a predetermined size, it is considered that the camera is not determined as an important camera. Furthermore, it is also considered to determine the camera as a camera with a higher importance as the image region size of the portion where the focused event occurs in the field of view increases.

Furthermore, it is considered to determine the importance of the camera on the basis of a viewpoint of whether or not the camera is a camera desired to be included in the camera path later.

For example, it is considered that, in a scene where a team A is attacking, a camera that images a route where a player holding an A-team ball passes through in a B-team court from the front side is determined as an important camera, for example.

Moreover, it is considered to determine the importance of the camera on the basis of a viewpoint of whether or not a specific subject is included. For example, a camera that images a subject as a specific player such as a foreign star player is determined as an important camera.

As the data selection according to the importance of the camera, the following example is considered.

Specifically, in a case where the importance of the camera for texture is set to be higher than that of the camera for subject sensing, as the importance based on the camera application, the captured image data is selected, from the selection target data, as the data to be used to generate the free viewpoint image, for some cameras determined as the cameras for texture.

In free viewpoint image generation using three-dimensional data, it is desirable to have textures from more viewpoints, as a texture to be pasted to the three-dimensional data, in order to improve the image quality of the free viewpoint image. That is, regarding the viewpoint of the camera for texture, it is desirable to select the captured image data as the data to be used to generate the free viewpoint image. On the other hand, regarding the camera for subject sensing (camera for three-dimensional data generation), if the three-dimensional data has been generated, there is no need to use the captured image data to generate the free viewpoint image. For example, in terms of a relationship between the camera for texture and the camera for subject sensing, it is considered to assume the importance of the camera for texture to be high and the importance of the camera for three-dimensional data generation to be low.

Then, as described above, it is possible to select the captured image data only for the camera for texture with high importance as the data to be used to generate the free viewpoint image and not to select the captured image data for the camera for subject sensing with low importance as the data to be used to generate the free viewpoint image.

At this time, it is considered to select the processing data from the selection target data, for the camera for subject sensing having a low importance.

As a result, it is possible to select the captured image data for some viewpoints that are important among the plurality of viewpoints and select the processing data for other viewpoints that are not important, as the data to be used to generate the free viewpoint image.

Therefore, it is possible to appropriately reduce the saved data amount according to the importance of the viewpoint.

Furthermore, regarding the data selection according to the importance, it is possible to select the captured image data or the processing data as the data to be used to generate the free viewpoint image, on the basis of the importance of the event such as the importance of the scene, and in addition, in a case where the captured image data is selected as the data to be used to generate the free viewpoint image, it is possible to select the captured image data of which viewpoint as the data to be used to generate the free viewpoint image, on the basis of the importance regarding the viewpoint.

Specifically, regarding the importance scene in the event to be the imaging target, captured image data of only the camera (for example, camera for texture) determined to be importance on the basis of the importance of the viewpoint is selected as the data to be used to generate the free viewpoint image, and captured image data is not selected as the data to be used to generate the free viewpoint image for other cameras (camera for subject sensing).

As a result, it is possible to prevent the data that is not important from being saved to generate the free viewpoint image, according to the importance related to the event or the viewpoint, and it is possible to reduce the saved data amount to generate the free viewpoint image.

### <9. Processing Procedure>

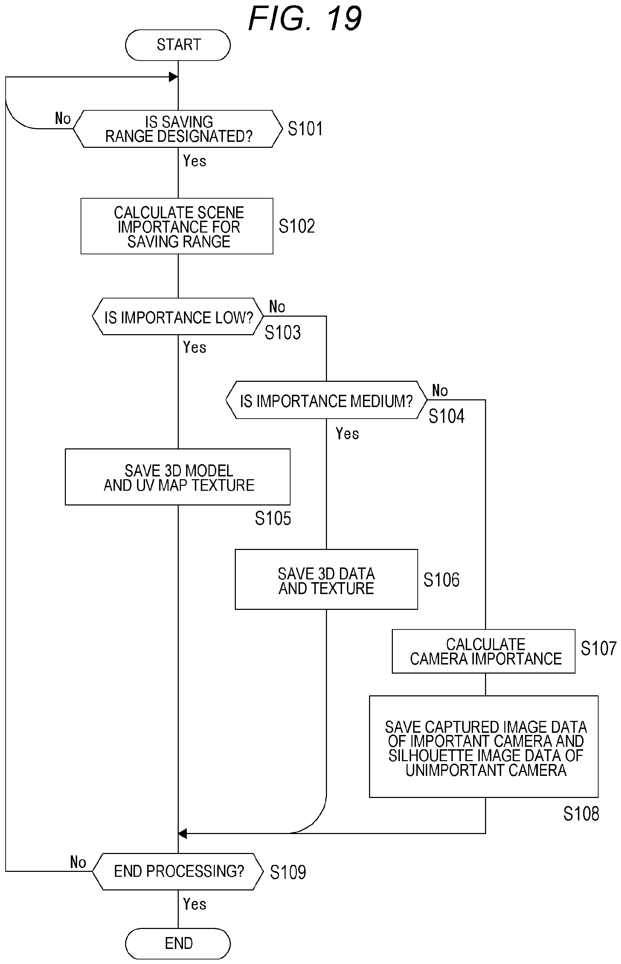

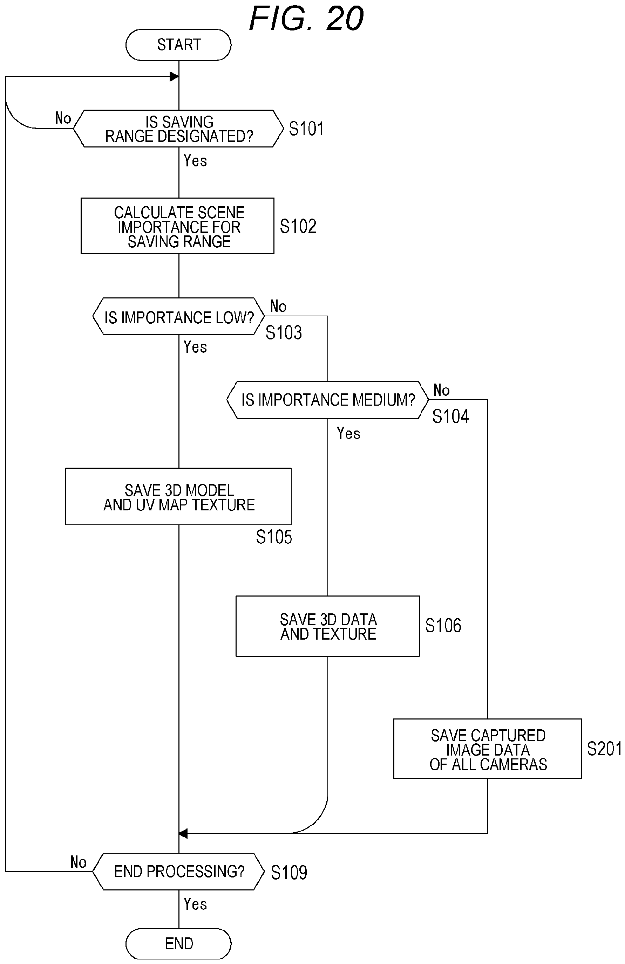

A processing procedure example for realizing a saved data selection method as the embodiment will be described with reference to the flowcharts in Figs. 19 and 20.

In the present example, each of the processing illustrated in Figs. 19 and 20 is executed by the CPU 71 of the image creation controller 1 on the basis of a program stored in the storage unit 79 or the like, for example.

Here, as a processing procedure for realizing the saved data selection method as the embodiment, three examples including a first example to a third example are exemplified.

The first example is an example corresponding to a case where a viewpoint is constantly designated during broadcasting and a free viewpoint image is generated according to the designated viewpoint. That is, the free viewpoint image is generated for an entire period of one event, for example, a game or the like during broadcasting, and data to be used to generate the free viewpoint image is saved only in a part of the period of the event, in order to generate the free viewpoint image again after broadcasting (posterior free viewpoint image generation).

In this case, for the posterior free viewpoint image generation, for example, data in a saving target range is designated by the operator OP1, during broadcasting. Then, in processing as the first example to be described below, data selection according to the importance of the scene is performed, using the data in the saving target range (captured image data and processing data) as the selection target data.

A processing procedure example corresponding to a case of the first example will be described with reference to Fig. 19.

The processing illustrated in Fig. 19 is executed during broadcasting of an event.

First, the CPU 71 waits for saving range designation in step S101. That is, the saving range of the data for the posterior free viewpoint image generation is designated by the operator OP1 or the like.

In a case where it is determined in step S101 that the saving range designation is performed, the CPU 71 proceeds to step S102 and calculates a scene importance for the saving range. Here, the scene importance is determined to be any one of three values of low, medium, and high. Note that, since the method for determining the scene importance to be low, medium, or high has been described, overlapped description is omitted.

In step S103 following step S102, the CPU 71 determines whether or not the importance is low.

If the importance is low in step S103, the CPU 71 proceeds to step S105, and executes processing for saving the 3D model and the UV map texture, and ends the series of processing illustrated in Fig. 19.

Here, as the "processing for saving", as illustrated above, it is considered to execute one of the processing for holding the recorded state or the processing for outputting to the other recording medium.

As described above, by saving the 3D model and the UV map texture for the scene with low importance, it is possible to perform the posterior free viewpoint image generation, and it is possible to reduce the saved data amount to generate the free viewpoint image.

Furthermore, in a case where it is determined in step S103 that the importance is not low, the CPU 71 proceeds to step S104 and determines whether or not the importance is medium.

In a case where it is determined that the importance is medium, the CPU 71 proceeds to step S106 and executes processing for saving the 3D data and the texture. The texture mentioned here is image data obtained by extracting an image portion of a target subject such as a player, from the captured image data of the camera for texture.

By executing the saving processing in step S106, in a case where the importance is medium, it is possible to generate a free viewpoint image with higher image quality than that in a case where the importance = low, as the posterior free viewpoint image generation, and it is possible to reduce the saved data amount than that in a case where the captured image data of each camera is saved.

In response to the execution of the saving processing in step S106, the CPU 71 ends the series of processing illustrated in Fig. 19.

Furthermore, in a case where it is determined in step S104 that the importance is not medium (that is, importance is high), the CPU 71 proceeds to step S107 and calculates a camera importance. Here, for example, as the calculation of the importance based on the application of the camera, an example of calculating the importance of the camera for texture as high and the importance of the camera for subject sensing as low is used. In other words, the camera for texture is determined as an important camera (high importance camera) and the camera for subject sensing is determined as an unimportant camera (low importance camera).

In step S108 following step S107, the CPU 71 executes processing for saving captured image data of the important camera and silhouette image data of the unimportant camera.

As a result, in a case where the importance is high, it is possible to generate the free viewpoint image with a higher degree of freedom than that in a case where the importance = medium, as the posterior free viewpoint image generation.

In response to the execution of the saving processing in step S108, the CPU 71 ends the series of processing illustrated in Fig. 19.

Note that, regarding the saving processing in step S106, to generate the free viewpoint image using the 3D data and the texture, the parameter data described above (at least parameter data of each camera for texture) is needed to paste an appropriate texture for each viewpoint. Therefore, as the saving processing in step S106, actually, processing for saving the parameter data for each camera for texture, together with the 3D data and the texture, is executed.

Furthermore, this similarly applies to the saving processing in step S108, and in step S108, processing for saving the parameter data of each camera for texture together with the captured image data of the important camera (camera for texture) and the silhouette image data of the unimportant camera (camera for subject sensing) is executed.

Subsequently, the second example will be described.

The second example is not based on the premise that the free viewpoint image is constantly generated during broadcasting as in the first example and based on the premise that the free viewpoint image is generated only in a target section instructed by the operator OP1 or the like, during broadcasting.

In this case, the free viewpoint image is generated again after broadcasting, for the section instructed by the operator OP1 or the like as the target section of the free viewpoint image generation during broadcasting.

That is, this case is different from the first example described above in a point that the saving range in step S101 is a range designated as the generation target section of the free viewpoint image during broadcasting.

Note that, since the processing procedure example corresponding to the second example is similar to a case of the first example illustrated in Fig. 19, overlapped description is omitted.

A data selection method for a scene with the importance = high of the third example is different from those of the first example and the second example.

A processing procedure example corresponding to a case of the third example will be described with reference to Fig. 20.

First, in this case, in a case where it is assumed that the free viewpoint image is constantly generated during broadcasting as in the first example, the saving range in step S101 is designated as a data saving range for the posterior free viewpoint image generation, and in a case where it is assumed that the free viewpoint image is generated only in the target section instructed by the operator OP1 or the like during broadcasting as in the second example, the saving range in step S101 is a range designated as the target section of the free viewpoint image generation during broadcasting.

A difference from the processing illustrated in Fig. 19 is points that the processing for calculating the camera importance in step S107 is omitted and the processing in step S201 is executed instead of the processing in step S108.

The CPU 71 executes processing for saving the captured image data of all the cameras in step S201. That is, in this case, for the scene with high importance, the camera importance is not calculated, and the captured image data of all the cameras is saved.

In a case of such processing, in a case where the importance is high, it is possible to generate the free viewpoint image with a higher degree of freedom than that in a case where the importance = medium, as the posterior free viewpoint image generation.

### <10. Modified Examples>

Note that, the embodiment is not limited to the specific example described above, and may have configurations as various modifications.

For example, in the above, an example is used in which the image creation controller 1 selects data to be saved according to the embodiment. However, it is possible to use a configuration in which the other information processing device, for example, the free viewpoint image server 2 or the like selects the data to be saved.

Furthermore, some or all of the components of the image processing system as the embodiment according to the present technology (in example in Fig. 1, image creation controller 1, free viewpoint image server 2, video servers 3 and 4, NAS 5, switcher 6, image conversion unit 7, utility server 8, and imaging device 10), excluding the imaging device 10 and the operation unit of each device (corresponding to remote controller) can be provided on a cloud that can be used via a network.

Furthermore, in the above, an example has been described where the event to be a target of free viewpoint image generation is a sports game. However, the present technology can be suitably applied to a case where a free viewpoint image is generated for other events, for example, music lives, musicals, variety programs or the like.

For example, in a case where the target is the music live, it is considered to detect a scene where a subject as a singer is singing, a main portion of a song, a scene where a back dancer or the like is dancing, or the like, as an important scene.

Furthermore, it is considered to reduce the saved data amount according to the importance, by converting a resolution or a frame rate of at least one of the captured image data or the processing data according to the importance. Specifically, it is considered to lower the resolution or the frame rate, as the importance is lower.

As a result, it is possible to reduce the saved data amount for the free viewpoint image generation.

### <11. Summary of Embodiment>

As described above, the information processing device (image creation controller 1) according to the embodiment includes the selection processing unit (selection processing unit 24) that selects the data to be used to generate the free viewpoint image according to the importance related to at least one of the event or the viewpoint, as setting a plurality of pieces of captured image data obtained by imaging an event from a plurality of viewpoints and processing data obtained by, at least, executing processing related to the generation of the three-dimensional information of the subject on the captured image data, as selection target data.

As a result, for example, it is possible to save the captured image data for only the important scene of the plurality of scenes included in the event for the free viewpoint image generation or to save the captured image data for only the important viewpoint among the plurality of viewpoints for the free viewpoint image generation. Alternatively, it is possible to save the captured image data of the important scene to generate the free viewpoint image and to save the processing data, not the captured image data, of the unimportant scene to generate the free viewpoint image, for example.

Therefore, it is possible to prevent the data that is not important from being saved to generate the free viewpoint image, according to the importance related to the event or the viewpoint, and it is possible to reduce the saved data amount to generate the free viewpoint image.

Furthermore, in the information processing device according to the embodiment, the importance includes the importance of the scene included in the event.

As a result, for example, it is possible to appropriately select the data to be used to generate the free viewpoint image, according to the importance of the scene, for example, selection of the captured image data for the importance scene among the plurality of scenes included in the event and selection of the processing data for the unimportant scene as the data to be used to generate the free viewpoint image.

Therefore, it is possible to appropriately reduce the saved data amount according to the importance of the scene.

Moreover, in the information processing device according to the embodiment, the importance includes the importance for each viewpoint.

As a result, for example, it is possible to appropriately select the data to be used to generate the free viewpoint image, according to the importance of the viewpoint, for example, selection of the captured image data for the important viewpoint among the plurality of viewpoints and selection of the processing data for the unimportant viewpoint as the data to be used to generate the free viewpoint image.

Therefore, it is possible to appropriately reduce the saved data amount according to the importance of the viewpoint.

Furthermore, in the information processing device according to the embodiment, the importance for each viewpoint is the importance based on the application of the camera arranged for each viewpoint.

As the camera used to generate the free viewpoint image, for example, it is assumed to use cameras having different applications such as the camera for three-dimensional data generation used to obtain the image for three-dimensional data generation of the subject or the camera for texture used to obtain the texture image to be pasted to the three-dimensional data.

In free viewpoint image generation using three-dimensional data, it is desirable to have textures from more viewpoints, as a texture to be pasted to the three-dimensional data, in order to improve the image quality of the free viewpoint image. That is, regarding the viewpoint of the camera for texture, it is desirable to select the captured image data as the data to be used to generate the free viewpoint image. On the other hand, regarding the camera for three-dimensional data generation, if the three-dimensional data has been generated, there is no need to use the captured image data to generate the free viewpoint image. For example, in terms of a relationship between the camera for texture and the camera for three-dimensional data generation, it is considered to assume that the importance of the camera for texture is high and the camera for three-dimensional data generation is low. For example, it is possible to appropriately select the data to be used to generate the free viewpoint image according to the application of the camera, for example, as selecting the captured image data of only the camera for texture with high importance as the data used to generate the free viewpoint image and not selecting the captured image data of the camera for three-dimensional data generation with low importance as the data to be used to generate the free viewpoint image.

Therefore, it is possible to appropriately reduce the saved data amount, according to the importance determined on the basis of the application of the camera.

Furthermore, in the information processing device according to the embodiment, the importance for each viewpoint is the importance based on the imaging target from the viewpoint.

As a result, it is possible to select the data to be used to generate the free viewpoint image, according to the importance in a viewpoint of whether or not a viewpoint is the viewpoint capturing the imaging target as the focused event (for example, player holding ball is attacking or the like) in the field of view.

Therefore, it is possible to select the data to be used to generate the free viewpoint image so as to reduce the saved data amount for the viewpoints other than the viewpoint capturing the important imaging target, and it is possible to appropriately reduce the saved data amount, according to the importance based on the imaging target from the viewpoint.

Moreover, in the information processing device according to the embodiment, the selection processing unit selects data according to the importance, on the basis of on the image analysis on the captured image data.

By performing the image analysis on the captured image data, it is possible to recognize imaging content indicating whether or not a subject with high importance is imaged or the like, for example.

Therefore, it is possible to appropriately select the data according to the importance related to the event or the viewpoint, and it is possible to appropriately reduce the saved data amount to generate the free viewpoint image.

Moreover, in the information processing device according to the embodiment, the selection processing unit determines the importance on the basis of the user operation input.

As a result, it is possible to appropriately reduce the saved data amount to generate the free viewpoint image, according to the importance determined by the user.

Furthermore, in the information processing device according to the embodiment, the processing data includes the silhouette image data of the subject.

While the silhouette image data has a less data amount than the captured image data, it is possible to generate the free viewpoint image using the three-dimensional data generated from the silhouette image data.

Therefore, in a case where the silhouette image data is selected as the data to be used to generate the free viewpoint image, it is possible to reduce the saved data amount while enabling to generate the free viewpoint image.

Moreover, in the information processing device according to the embodiment, the processing data includes the three-dimensional data of the subject generated by the visual hull from the captured image data of the plurality of viewpoints.

While the three-dimensional data has a less data amount than the total data amount of the captured image data for each viewpoint, it is possible to generate the free viewpoint image by using the three-dimensional data.

Therefore, in a case where the three-dimensional data is selected as the data to be used to generate the free viewpoint image, it is possible to reduce the saved data amount, while enabling to generate the free viewpoint image.

Furthermore, in the information processing device according to the embodiment, the processing data includes the polygon mesh data of the subject generated from the captured image data of the plurality of viewpoints.

The polygon mesh data has a less data amount than a total data amount of the captured image data for each viewpoint, and it is possible to generate the free viewpoint image by using the polygon mesh data.

Therefore, in a case where the polygon mesh data is selected as the data to be used to generate the free viewpoint image, it is possible to reduce the saved data amount, while enabling to generate the free viewpoint image.

Furthermore, in the information processing device according to the embodiment, the selection processing unit selects which one of the captured image data or the processing data as the data to be used to generate the free viewpoint image, according to the importance.

As a result, it is possible to select the captured image data in a case where the importance is high and to select the processing data in a case where the importance is low.

In a case where the processing data is selected as the data to be used to generate the free viewpoint image, there is a possibility that a degree of freedom in generating the free viewpoint image and an image quality are restricted, as compared with a case where the captured image data is selected. Therefore, the captured image data can be selected in a case where the importance is high and the processing data can be selected in a case where the importance is low as described above so that it is possible to reduce the saved data amount by preventing the restriction in the degree of freedom in generating the free viewpoint image in a case where the importance is high and selecting the processing data with less saved data amount in a case where the importance is low. That is, while preventing the degree of freedom in generating the free viewpoint image from being impaired in a case where the importance is high, it is possible to reduce the saved data amount.

Moreover, in the information processing device according to the embodiment, the importance includes the importance related to the viewpoint, and the selection processing unit selects the captured image data of some viewpoints as the data to be used to generate the free viewpoint image, according to the importance related to the viewpoint.

As a result, for some viewpoints that are important among the plurality of viewpoints, it is possible to select the captured image data as the data to be used to generate the free viewpoint image.

Therefore, it is possible to appropriately reduce the saved data amount according to the importance of the viewpoint.

Moreover, in the information processing device according to the embodiment, the selection processing unit selects the processing data as the data to be used to generate the free viewpoint image, for other viewpoints other than the some viewpoints.

As a result, it is possible to select the captured image data for some viewpoints that are important among the plurality of viewpoints and select the processing data for other viewpoints that are not important, as the data to be used to generate the free viewpoint image.

Therefore, it is possible to appropriately reduce the saved data amount according to the importance of the viewpoint.

Furthermore, since the processing data is used to generate the free viewpoint image, for the other viewpoints other than the important viewpoints, it is possible to improve the image quality of the free viewpoint image, as compared with a case where only the captured image data of the important viewpoints is used.

Furthermore, in the information processing device according to the embodiment, the processing data includes the polygon mesh data of the subject generated from the captured image data of the plurality of viewpoints, and the selection processing unit selects the polygon mesh data as the data to be used to generate the free viewpoint image, according to the importance.

For example, for the scene with low importance, it is considered to select the polygon mesh data as the data to be used to generate the free viewpoint image.

As a result, it is possible to generate the free viewpoint image with computer graphics (CG) using the polygon mesh data, and it is possible to reduce the saved data amount to generate the free viewpoint image.

Moreover, in the information processing device according to the embodiment, the selection processing unit selects the captured image data or the processing data as the data to be used to generate the free viewpoint image, on the basis of the importance related to the event, and, in addition, selects the captured image data of which viewpoint as the data to be used to generate the free viewpoint image, on the basis of the importance regarding related to the viewpoint in a case where the captured image data is selected as the data to be used to generate the free viewpoint image (refer to Fig. 19).

As a result, it is possible to select only the captured image data from the important viewpoint, in the important scene during the event, as the data to be used to generate the free viewpoint image.

Therefore, it is possible to prevent the data that is not important from being saved to generate the free viewpoint image, according to the importance related to the event or the viewpoint, and it is possible to reduce the saved data amount to generate the free viewpoint image.

Moreover, in the information processing device according to the embodiment, the selection processing unit generates the management information so that the data selected from the selection target data recorded in the single or the plurality of recording media according to the importance is held in the single or the plurality of recording media in the recorded state.

As a result, it is possible to appropriately reduce the saved data amount according to the importance, coping with the specification for generating the free viewpoint image using the captured image data and the processing data held in the single or the plurality of recording media in the recorded state.

Furthermore, in the information processing device according to the embodiment, the selection processing unit executes the processing for outputting the data selected from the selection target data recorded in the single or the plurality of recording media according to the importance to another or a plurality of other recording media.

As a result, it is possible to reduce an appropriate saved data amount according to the importance, coping with a specification for generating the free viewpoint image by holding the data to be used to generate the free viewpoint image, among the captured image data and the processing data recorded in the single or the plurality of recording media, in the another recording medium. Specifically, in this case, it is possible to reduce the saved data amount in the another recording medium described above.

Moreover, in the information processing device according to the embodiment, the selection processing unit converts the resolution or the frame rate according to the importance, for at least one of the captured image data or the processing data.

As a result, it is possible to reduce the saved data amount by lowering the resolution and the frame rate of the data with low importance.

Furthermore, an information processing method according to the embodiment is an information processing method in which the information processing device selects the data to be used to generate the free viewpoint image according to the importance related to at least one of the event or the viewpoint, as setting the plurality of pieces of captured image data obtained by imaging the event from the plurality of viewpoints and the processing data obtained by, at least, executing the processing related to the generation of the three-dimensional information of the subject on the captured image data, as selection target data.

With such an information processing method, functions and effects similar to functions and effects of the information processing device as the embodiment described above can be obtained.

Here, as the embodiment, a program can be considered, for example, for causing a CPU, a digital signal processor (DSP), or the like, or a device including the CPU, the DSP, or the like, to execute the processing by the selection processing unit 24 described with reference to Figs. 19 and 20 or the like.

That is, the program according to the embodiment is a program that can be read by a computer device and is a program for causing the computer device to realize a function for selecting data to be used to generate the free viewpoint image according to the importance of at least one of the event or the viewpoint, as setting the plurality of pieces of captured image data obtained by imaging the event from the plurality of viewpoints and the processing data obtained by executing at least the processing related to the three-dimensional information generation of the subject on the captured image data, as the selection target data.

With such a program, the function as the selection processing unit 24 described above can be implemented by the device as the information processing device 70.

The program described above can be recorded in advance in an HDD as a recording medium built in a device such as a computer device, a ROM in a microcomputer having a CPU, or the like.

Alternatively, the program can be temporarily or permanently stored (recorded) in a removable recording medium such as a flexible disk, a compact disc read-only memory (CD-ROM), a magneto optical (MO) disk, a digital versatile disc (DVD), a Blu-ray disc (registered trademark), a magnetic disk, a semiconductor memory, or a memory card. Such a removable recording medium can be provided as so-called package software.

Furthermore, such a program may also be installed from a removable recording medium to a personal computer or the like, or can be downloaded from a download site via a network such as a local area network (LAN) or the Internet.

Furthermore, such a program is suitable for providing the selection processing unit 24 of the embodiment in a wide range. For example, by downloading the program to a personal computer, a portable information processing device, a mobile phone, a game device, a video device, a personal digital assistant (PDA), or the like, the personal computer or the like can be caused to function as a device that achieves the processing as the selection processing unit 24 according to the present disclosure.

Note that the effects described in the present specification are merely examples and are not limited, and other effects may be provided.

### <12. Present Technology>

Note that the present technology can also employ the following configurations.
(1)
   An information processing device including:
   a selection processing unit that selects data to be used to generate a free viewpoint image according to an importance related to at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.
(2) The information processing device according to (1), in which
   the importance includes an importance of a scene included in the event.
(3) The information processing device according to (1) or (2), in which
   the importance includes an importance for each viewpoint.
(4) The information processing device according to (3), in which
   the importance for each viewpoint includes an importance based on an application of a camera arranged for each viewpoint.
(5) The information processing device according to (3) or (4), in which
   the importance for each viewpoint includes an importance based on an imaging target from the viewpoint.
(6) The information processing device according to any one of (1) to (5), in which
   the selection processing unit
   selects data according to the importance, on the basis of image analysis on the captured image data.
(7) The information processing device according to claim 1, in which
   the selection processing unit
   determines the importance on the basis of a user operation input.
   The information processing device according to (1).
(8) The information processing device according to any one of (1) to (7), in which
   the processing data includes silhouette image data of a subject.
(9) The information processing device according to any one of (1) to (8), in which
   the processing data includes three-dimensional data of a subject generated by visual hull from captured image data of the plurality of viewpoints.
(10) The information processing device according to any one of (1) to (9), in which
   the processing data includes polygon mesh data of a subject generated from the captured image data of the plurality of viewpoints.
(11) The information processing device according to any one of (1) to (10), in which
   the selection processing unit
   selects the captured image data or the processing data, as data to be used to generate a free viewpoint image, according to the importance.
(12) The information processing device according to any one of (1) to (11), in which
   the importance includes an importance related to the viewpoint, and
   the selection processing unit
   selects the captured image data of some viewpoints as data to be used to generate a free viewpoint image, according to the importance related to the viewpoint.
(13) The information processing device according to (12), in which
   the selection processing unit
   selects the processing data as data to be used to generate a free viewpoint image, for other viewpoints other than the some viewpoints.
(14) The information processing device according to any one of (1) to (13), in which
   the processing data includes polygon mesh data of a subject generated from the captured image data of the plurality of viewpoints, and
   the selection processing unit
   selects the polygon mesh data as data to be used to generate a free viewpoint image, according to the importance.
(15) The information processing device according to any one of (1) to (14), in which
   the selection processing unit
   selects the captured image data or the processing data, as data to be used to generate a free viewpoint image, on the basis of an importance related to the event, and
   in a case where the captured image data is selected as the data to be used to generate the free viewpoint image, selects the captured image data of which one of the viewpoints as the data to be used to generate the free viewpoint image, on the basis of the importance related to the viewpoint.
(16) The information processing device according to any one of (1) to (15), in which
   the selection processing unit
   generates management information so that data selected according to the importance from the selection target data recorded in a single or a plurality of recording media is held in the single or the plurality of recording media in a recorded state.
(17) The information processing device according to any one of (1) to (15), in which
   the selection processing unit
   executes processing for outputting data selected from the selection target data recorded in a single or a plurality of recording media according to the importance, to another or a plurality of other recording media.
(18) The information processing device according to any one of (1) to (17), in which
   the selection processing unit
   converts a resolution or a frame rate according to the importance, for at least one of the captured image data or the processing data.
(19) An information processing method, in which
   an information processing device
   selects data to be used to generate a free viewpoint image according to an importance related to at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.
(20) A program that is readable by a computer device, the program causing the computer device to realize a function of selecting data to be used to generate a free viewpoint image according to an importance of at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.

### REFERENCE SIGNS LIST

- 1: Image creation controller
- 2: Free viewpoint image server
- 3, 4, 4A, 4B, 4C, 4D: Video server
- 5: NAS
- 6: Switcher
- 7: Image conversion unit
- 8: Utility server
- 10: Imaging device
- 24: Selection processing unit
- 32a: Processing data generation unit
- 32b: First FV generation unit
- 32c: Second FV generation unit
- Gs: Generation operation screen
- Gg: Path creation screen
- 41: Scene window
- 42: Scene list display portion
- 43: Camera path window
- 44: Camera path list display portion
- 45: Parameter display portion
- 46: Transmission window
- 51: Preset list display portion
- 52: Camera path list display portion
- 53: Camera path window
- 54: Operation panel portion
- 55: Preview window
- 70: Information processing device
- 71: CPU
- 72: ROM
- 73: RAM
- 74: Bus
- 75: Input/output interface
- 76: Input unit
- 77: Display unit
- 78: Audio output unit
- 79: Storage unit
- 80: Communication unit
- 81: Removable recording medium
- 82: Drive
- P1: Foreground extraction processing
- P2: 3D data generation processing
- P3: 3D model generation processing
- P4: Texture generation processing

## Claims

1. An information processing device comprising:
a selection processing unit configured to select data to be used to generate a free viewpoint image according to an importance related to at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.

2. The information processing device according to claim 1, wherein
the importance includes an importance of a scene included in the event.

3. The information processing device according to claim 1, wherein
the importance includes an importance for each viewpoint.

4. The information processing device according to claim 3, wherein
the importance for each viewpoint includes an importance based on an application of a camera arranged for each viewpoint.

5. The information processing device according to claim 3, wherein
the importance for each viewpoint includes an importance based on an imaging target from the viewpoint.

6. The information processing device according to claim 1, wherein
the selection processing unit
selects data according to the importance, on a basis of image analysis on the captured image data.

7. The information processing device according to claim 1, wherein
the selection processing unit
determines the importance on a basis of a user operation input.

8. The information processing device according to claim 1, wherein
the processing data includes silhouette image data of a subject.

9. The information processing device according to claim 1, wherein
the processing data includes three-dimensional data of a subject generated by visual hull from captured image data of the plurality of viewpoints.

10. The information processing device according to claim 1, wherein
the processing data includes polygon mesh data of a subject generated from the captured image data of the plurality of viewpoints.

11. The information processing device according to claim 1, wherein
the selection processing unit
selects the captured image data or the processing data, as data to be used to generate a free viewpoint image, according to the importance.

12. The information processing device according to claim 1, wherein
the importance includes an importance related to the viewpoint, and
the selection processing unit
selects the captured image data of some viewpoints as data to be used to generate a free viewpoint image, according to the importance related to the viewpoint.

13. The information processing device according to claim 12, wherein
the selection processing unit
selects the processing data as data to be used to generate a free viewpoint image, for other viewpoints other than the some viewpoints.

14. The information processing device according to claim 1, wherein
the processing data includes polygon mesh data of a subject generated from the captured image data of the plurality of viewpoints, and
the selection processing unit
selects the polygon mesh data as data to be used to generate a free viewpoint image, according to the importance.

15. The information processing device according to claim 1, wherein
the selection processing unit
selects the captured image data or the processing data, as data to be used to generate a free viewpoint image, on a basis of an importance related to the event, and
in a case where the captured image data is selected as the data to be used to generate the free viewpoint image, selects the captured image data of which one of the viewpoints as the data to be used to generate the free viewpoint image, on a basis of the importance related to the viewpoint.

16. The information processing device according to claim 1, wherein
the selection processing unit
generates management information so that data selected according to the importance from the selection target data recorded in a single or a plurality of recording media is held in the single or the plurality of recording media in a recorded state.

17. The information processing device according to claim 1, wherein
the selection processing unit
executes processing of outputting data selected from the selection target data recorded in a single or a plurality of recording media according to the importance, to another or a plurality of other recording media.

18. The information processing device according to claim 1, wherein
the selection processing unit
converts a resolution or a frame rate according to the importance, for at least one of the captured image data or the processing data.

19. An information processing method, wherein
an information processing device
selects data to be used to generate a free viewpoint image according to an importance related to at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.

20. A program that is readable by a computer device, the program causing the computer device to realize a function of selecting data to be used to generate a free viewpoint image according to an importance of at least one of an event or a viewpoint, as setting a plurality of pieces of captured image data obtained by imaging the event from the plurality of viewpoints and processing data obtained by executing at least processing related to three-dimensional information generation of a subject on the captured image data as selection target data.
